(19) Europäisches Patentamt
European Patent Office
Office européen des brevets

(11) **EP 4 787 304 A1**

(12) **EUROPEAN PATENT APPLICATION**
published in accordance with Art. 153(4) EPC

(43) Date of publication:
**05.08.2026 Bulletin 2026/32**

(21) Application number: **24870355.5**

(22) Date of filing: **03.09.2024**

(51) International Patent Classification (IPC):
***G06T 7/20*** (2017.01)

(52) Cooperative Patent Classification (CPC):
**G06T 7/20; G06V 20/58**

(86) International application number:
**PCT/CN2024/116579**

(87) International publication number:
**WO 2025/066809 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **26.09.2023 CN 202311251719**

(71) Applicant: **HUAWEI TECHNOLOGIES CO., LTD.
Shenzhen 518129 (CN)**

(72) Inventors:
• **GAO, Zhiwei**
**Shenzhen, Guangdong 518129 (CN)**
• **BA, Tengyue**
**Shenzhen, Guangdong 518129 (CN)**
• **SUN, Qiming**
**Shenzhen, Guangdong 518129 (CN)**
• **CHENG, Siyuan**
**Shenzhen, Guangdong 518129 (CN)**

(74) Representative: **Gill Jennings & Every LLP
The Broadgate Tower
20 Primrose Street
London EC2A 2ES (GB)**

(54) **SCENARIO GENERATION METHOD AND RELATED APPARATUS**

(57)  A scenario generation method and a related apparatus are provided, and are applied to the field of intelligent driving. In embodiments of this application, motion information of an obstacle may be obtained based on scenario data of a first driving scenario. For a first obstacle in the first driving scenario, motion information of the first obstacle is adjusted through controllable modification. For a second obstacle, motion information of the second obstacle is jointly optimized and updated based on the motion information of the first obstacle and original motion information of the second obstacle. A target driving scenario may be generated based on updated motion information of the first obstacle and updated motion information of the second obstacle. In conclusion, in solutions of this application, controllable adjustment can be performed on a part of obstacles in the first driving scenario, and a part of the obstacles can be adaptively adjusted through joint optimization. In this way, controllable modification of the scenario is implemented and interaction between the obstacles in the scenario is improved while authenticity of the generated scenario is ensured.

FIG. 2

## Description

This application claims priority to Chinese Patent Application No. 202311251719.8, filed with the China National Intellectual Property Administration on September 26, 2023 and entitled "SCENARIO GENERATION METHOD AND RELATED APPARATUS", which is incorporated herein by reference in its entirety.

TECHNICAL FIELD

This application relates to the field of intelligent driving technologies, and in particular, to a scenario generation method and a related apparatus.

BACKGROUND

To ensure safety, vehicles need to be tested before launched. A simulation test scenario has advantages of high coverage, a safe test process, high test efficiency, and the like, and is widely used for testing intelligent driving terminals. Currently, many manufacturers have launched a large quantity of self-used or commercial simulators.

A test scenario construction capability is an important factor to measure quality of simulators. During test scenario construction, some simulators generate a driving scenario by manually editing an object in a scenario, while some simulators collect real road testing data and convert the data into a driving scenario. However, the scenario edited in the former may rarely occur in an actual situation and lacks authenticity. Forming the scenario by converting the road testing data can ensure authenticity of the scenario, but a large amount of time is required to collect real road testing scenarios. This driving scenario generation manner lacks scenario controllability. When a new interaction scenario needs to be designed, a new scenario needs to be further collected to obtain the new interaction scenario. For example, when a new action (for example, braking or lane-change) needs to be added to a preceding vehicle for testing an intelligent driving function of an ego vehicle, an actor vehicle usually needs to travel again to collect corresponding road testing data and form a new scenario.

In conclusion, how to improve scenario controllability without significantly reducing scenario authenticity is a hot topic currently being studied by persons skilled in the art.

SUMMARY

Embodiments of this application provide a scenario generation method and a related apparatus, to implement controllable modification of a scenario and improve interaction between obstacles in the scenario while ensuring authenticity of a generated scenario.

According to a first aspect, an embodiment of this application provides a scenario generation method, where the method includes:

  obtaining scenario data of a first driving scenario, where the scenario data indicates initial motion information of an obstacle in the first driving scenario, and the obstacle in the first driving scenario includes a first obstacle and a second obstacle;
  adjusting initial motion information of the first obstacle, to generate first motion information of the first obstacle;
  obtaining second motion information of the second obstacle based on initial motion information of the second obstacle and the first motion information of the first obstacle; and
  generating a target driving scenario based on the first motion information of the first obstacle and the second motion information of the second obstacle.

In this embodiment of this application, motion information of a plurality of obstacles is obtained based on the scenario data of the first driving scenario, and one or more new scenarios may be constructed by updating the motion information of the obstacles. However, different update manners may be used for different obstacles. An example in which the obstacle includes at least the first obstacle and the second obstacle is used. For the first obstacle, in this embodiment of this application, motion information of the first obstacle is adjusted through controllable modification. In other words, the motion information of the first obstacle may be adjusted in an adjustment manner such as manual modification, automatic modification, or even modification based on an artificial intelligence (artificial intelligence, AI) model. For the second obstacle, in this embodiment of this application, motion information of the second obstacle is updated based on the initial motion information of the second obstacle and information about another object in the scenario. This update process may also be referred to as joint optimization. The information about the another object in the first driving scenario may include updated motion information of the first obstacle, and may further include motion information of an ego vehicle, and the like.

On the one hand, in a process of updating the motion information of the second obstacle, an original trajectory of the second obstacle is considered. In this way, updated motion information (that is, the second motion information) of the second obstacle is more authentic. On the other hand, in the process of updating the motion information of the second obstacle, impact of an information change of another object in the scenario is considered. In this way, the second obstacle in the scenario is associated with the another object in the scenario, and a scenario update process is more interactive. In conclusion, this solution can implement controllable modification of the scenario and improve interaction between obstacles in the scenario while ensuring authenticity of the generated scenario.

In addition, there may be a plurality of pieces of first motion information. In other words, the motion information of the first obstacle may be adjusted to generate a plurality of pieces of first motion information, and the plurality of pieces of first motion information is used to describe a plurality of possible motion processes of the first obstacle. Correspondingly, there may be a plurality of groups of second motion information. For example, when generating the target driving scenario, a scenario construction apparatus may obtain a corresponding group of second motion traveling information of the second obstacle for each piece of first motion information of the first obstacle, so that a plurality of new driving scenarios (that is, there may be a plurality of target driving scenarios) can be quickly constructed, thereby significantly improving scenario construction efficiency, and the plurality of driving scenarios can meet requirements of a user for scenario authenticity, controllability, and interaction.

With reference to the first aspect, in a possible implementation of the first aspect, the scenario data further includes initial motion information of the ego vehicle. For example, the initial motion information of the ego vehicle further includes an initial movement trajectory of the ego vehicle. Optionally, the initial motion information of the ego vehicle may be collected by using a sensor of the ego vehicle, for example, one or more of sensors such as a wheel speedometer, an inertial measurement unit, and a positioning system.

With reference to the first aspect, in a possible implementation of the first aspect, obtaining the second motion information of the second obstacle based on the initial motion information of the second obstacle and the first motion information of the first obstacle includes:

obtaining the second motion information of the second obstacle based on the initial motion information of the ego vehicle, the initial motion information of the second obstacle, and the first motion information of the first obstacle.

In this implementation, the motion information of the second obstacle may be further optimized in combination with the motion information of the ego vehicle, thereby further improving interaction and authenticity of the scenario process.

With reference to the first aspect, in another possible implementation of the first aspect, a degree of interaction between the first obstacle and the ego vehicle is not lower than a degree of interaction between the second obstacle and the ego vehicle. The degree of interaction refers to a degree of overlapping between movement trajectories of obstacles or between a movement trajectory of an obstacle and a movement trajectory of the ego vehicle in terms of time and space. For example, if a trajectory interaction point exists between the obstacle and the ego vehicle at a moment or in a time period, when the obstacle or the ego vehicle is at the trajectory interaction point, a closer position of the obstacle to the position of the ego vehicle indicates a higher degree of interaction between the obstacle and the ego vehicle. If no trajectory interaction point exists between the obstacle and the ego vehicle, a shorter distance in a case of the position of the obstacle closest to the position of the ego vehicle indicates a higher degree of interaction.

It may be understood that, for an obstacle that has strong interaction with the ego vehicle, the user has a higher design requirement for an action of the obstacle. Therefore, the motion information of the first obstacle with a high degree of interaction with the ego vehicle is independently and controllably adjusted in a controllable modification manner, and the motion information of the second obstacle is updated in a joint optimization manner in combination with the updated motion information of the first obstacle. In this way, a requirement for flexibility of action design of the strong-interaction obstacle can be better met, and user experience can be improved.

With reference to the first aspect, in still another possible implementation of the first aspect, adjusting the initial motion information of the first obstacle, to generate the first motion information of the first obstacle includes: adjusting the initial motion information of the first obstacle based on an input of the user, to generate the first motion information of the first obstacle. In this implementation, the first obstacle may be an obstacle selected by the user for adjustment. In other words, in this solution, the user is supported to perform controllable modification on the specified obstacle, thereby improving flexibility of scenario update and further improving user experience.

With reference to the first aspect, in still another possible implementation of the first aspect, adjusting the initial motion information of the first obstacle, to generate the first motion information of the first obstacle includes: adjusting the initial motion information of the first obstacle by using an artificial intelligence model, to generate the first motion information of the first obstacle. In this implementation, the first obstacle may be an obstacle automatically selected by the artificial intelligence model, and motion information of the obstacle is automatically adjusted by the artificial intelligence model. This can improve efficiency of updating the motion information and obtaining the target scenario, and also can improve flexibility and intelligence of scenario construction, thereby helping improve user experience.

With reference to the first aspect, in still another possible implementation of the first aspect, the second obstacle is an obstacle that has interaction with an updated first obstacle. In this case, the updated motion information of the first obstacle may be used when the motion information of the second obstacle is updated, thereby updating the motion information of the second obstacle more accurately and reasonably.

With reference to the first aspect, in still another possible implementation of the first aspect, the second obstacle is an obstacle that has interaction with the ego vehicle other than the first obstacle. In this case, the motion information of the ego vehicle may be used when the motion information of the second obstacle is updated, thereby updating the motion information of the second obstacle more accurately and reasonably.

With reference to the first aspect, in still another possible implementation of the first aspect, the method further includes:

determining an obstacle type based on a degree of interaction between an obstacle and the ego vehicle and a degree of interaction between obstacles in the first driving scenario, where the obstacle type includes a first-type obstacle and a second-type obstacle.

A degree of interaction between the first-type obstacle and the ego vehicle is higher than a degree of interaction between the second-type obstacle and the ego vehicle.

In this way, because the user has a higher requirement for controllable modification of an obstacle with stronger interaction, the foregoing implementation can implement controllable modification of the first-type obstacle, and perform joint optimization on the second-type obstacle, thereby meeting the requirement for controllable modification of the obstacle. Especially in a case in which an obstacle is modified by using a user operation or an AI model, distinguishing between the first-type obstacle and the second-type obstacle helps the user or the AI model select an obstacle that needs to be modified and an obstacle that needs to be jointly optimized, thereby improving user experience.

Optionally, the first obstacle belongs to the first-type obstacle, and the second obstacle includes at least one obstacle in the second-type obstacle and/or includes at least one obstacle other than the first obstacle in the first-type obstacle. In some solutions, the first-type obstacle may be referred to as a strong-interaction obstacle, and the second-type obstacle may be referred to as a weak-interaction obstacle.

With reference to the first aspect, in still another possible implementation of the first aspect, the obstacle in the first driving scenario includes a first-type obstacle and a second-type obstacle, where

the first-type obstacle is an obstacle whose degree of interaction with the ego vehicle meets a first condition; and the second-type obstacle includes an obstacle whose degree of interaction with the ego vehicle meets a second condition and/or an obstacle that has interaction with a third obstacle, the third obstacle is at least one obstacle in the first-type obstacle, and the first condition is different from the second condition. Further, the first obstacle belongs to the first-type obstacle, and the second obstacle includes at least one obstacle in the second-type obstacle and/or includes at least one obstacle other than the first obstacle in the first-type obstacle.

With reference to the first aspect, in still another possible implementation of the first aspect, the first condition includes: A time interval between an obstacle passing through a trajectory interaction point and the ego vehicle passing through the trajectory interaction point is in a first duration range;

the second condition includes: a time interval between an obstacle passing through a trajectory interaction point and the ego vehicle passing through the trajectory interaction point is in a second duration range, and a lower bound of the second duration range is greater than an upper bound of the first duration range; and when an obstacle and the third obstacle meet the following conditions, interaction exists between the obstacle and the third obstacle:
a trajectory interaction point exists between the obstacle and the third obstacle, and a time interval between the obstacle passing through the trajectory interaction point and the third obstacle passing through the trajectory interaction point is in a third duration range.

The foregoing implementation provides features of the first-type obstacle and the second-type obstacle. It can be learned that time at which the first-type obstacle passes through the trajectory interaction point is closer to time at which the ego vehicle passes through the trajectory interaction point, while time at which the second-type obstacle passes through the trajectory point is farther from time at which the ego vehicle passes through the trajectory point. Because a shorter time interval indicates greater impact of the obstacle on a behavior of the ego vehicle, the obstacle with a shorter time interval has a higher degree of interaction with the ego vehicle. In this way, a degree of interaction between the ego vehicle and the obstacle can be quantized, and different types of obstacles can be distinguished. This helps select an obstacle that needs to be modified and an obstacle that needs to be jointly optimized, and can improve user experience.

With reference to the first aspect, in still another possible implementation of the first aspect, the first condition includes: A trajectory interaction point exists between a movement trajectory of an obstacle and a movement trajectory of the ego vehicle, a first time interval between the obstacle passing through the trajectory interaction point and the ego vehicle passing through the trajectory interaction point is first N time intervals in a time interval sequence, N is an integer greater than 0, and the first N time intervals in the time interval sequence are less than or equal to a time interval other than the first N time intervals in the time interval sequence; and

the second condition includes: a trajectory interaction point exists between a movement trajectory of an obstacle and a movement trajectory of the ego vehicle, a first time interval between the obstacle passing through the trajectory interaction point and the ego vehicle passing through the trajectory interaction point is in first N+1 to K time intervals in the time interval sequence, K is an integer, and K>N, where

the time interval sequence includes M time intervals sequentially arranged by duration, each of the M time intervals is an interval between a moment at which an obstacle interacting with the ego vehicle passes through a first trajectory interaction point of the ego vehicle and a moment at which the ego vehicle passes through the first trajectory interaction point, the obstacle interacting with the ego vehicle is an obstacle that has a trajectory interaction point with the ego vehicle in the first driving scenario, M is an integer, and M≥K.

In the foregoing implementation, another feature of the first-type obstacle and the second-type obstacle is provided. The first-type obstacle and the second-type interaction obstacle are determined by sorting degrees of interaction. In any scenario, an obstacle with stronger interaction and an obstacle with weaker interaction in the scenario can be obtained without being limited by a fixed duration range. This can improve compatibility and flexibility of an obstacle classification solution, help select an obstacle that needs to be modified and an obstacle that needs to be jointly optimized, and can improve user experience.

With reference to the first aspect, in still another possible implementation of the first aspect, the initial motion information of the first obstacle includes a plurality of behavior parameters of the first obstacle, and the plurality of behavior parameters are used to describe a behavior of the first obstacle. Adjusting the initial motion information of the first obstacle, to generate the first motion information of the first obstacle includes: adjusting values or thresholds of the plurality of behavior parameters of the first obstacle, to generate the first motion information of the first obstacle.

It should be understood that the behavior herein is a behavior in a broad sense, and includes a behavior at a moment and a state of an entity, or includes an action that is performed continuously in a period of time. This implementation supports flexibly updating a motion process of the first obstacle by updating the value or threshold of the behavior parameter, and supports determining the behavior parameter at a moment or in a motion phase, thereby improving precision of editing obstacle information, and obtaining a scenario that better meets a user requirement.

With reference to the first aspect, in still another possible implementation of the first aspect, the initial motion information of the first obstacle includes a first action set and a first trigger set of the first obstacle, the first action set is used to describe a first action of the first obstacle, the first action set includes a value of a first behavior parameter of the first action, and the first trigger set is used to describe a condition for performing the first action; and

adjusting the initial motion information of the first obstacle, to generate the first motion information of the first obstacle includes:

adjusting the first action set and/or the first trigger set of the first obstacle, to generate the first motion information of the first obstacle. In the foregoing implementation, the behavior parameter of the first obstacle may be integrated into the action set and the trigger set. In this way, a behavior parameter set in a phase can be modified, thereby improving user experience.

With reference to the first aspect, in still another possible implementation of the first aspect, the initial motion information of the first obstacle includes an initial movement trajectory of the first obstacle; and

adjusting the initial motion information of the first obstacle, to generate the first motion information of the first obstacle includes:

adjusting the initial movement trajectory of the first obstacle to obtain a first movement trajectory, where the first motion information includes the first movement trajectory.

The initial movement trajectory may include a plurality of trajectory points, and the plurality of trajectory points may indicate a first position change of the first obstacle in a first time period. Similarly, the first movement trajectory may also include a plurality of trajectory points, and the plurality of trajectory points may indicate that the first movement trajectory indicates a second position change of the first obstacle in the first time period.

The foregoing implementation may support updating the motion information of the obstacle by editing the movement trajectory. Especially when a new scenario needs to be generated only by adjusting the trajectory, this can significantly improve efficiency of updating the motion information, thereby improving user experience.

With reference to the first aspect, in still another possible implementation of the first aspect, the initial movement trajectory of the first obstacle includes a plurality of trajectory points, and adjusting the initial movement trajectory of the first obstacle to obtain the first movement trajectory includes:

receiving an update operation that is input by the user and that is for a part or all of the plurality of trajectory points; and obtaining the first movement trajectory based on the update operation.

This implementation supports the user to input an operation to update the motion information of the first obstacle, thereby improving obstacle update flexibility and improving user experience.

With reference to the first aspect, in still another possible implementation of the first aspect, the scenario data further includes an initial movement trajectory of the ego vehicle. Obtaining the first movement trajectory based on an update indication for the initial movement trajectory of the first obstacle includes:

> determining a trajectory interaction point between the initial movement trajectory of the first obstacle and the initial movement trajectory of the ego vehicle;
> obtaining a derived trajectory point based on the trajectory interaction point, where the derived trajectory point is located on the initial movement trajectory of the ego vehicle and is at a position different from that of the trajectory interaction point; and
> obtaining the first movement trajectory based on the derived trajectory point.

In this implementation, the new first movement trajectory can be quickly obtained through derivation of the trajectory interaction point, thereby significantly improving efficiency of updating the motion information, improving user experience, and improving generalization of the generated scenario.

With reference to the first aspect, in still another possible implementation of the first aspect, obtaining the second motion information of the second obstacle based on the initial motion information of the second obstacle and the first motion information of the first obstacle includes:

determining the second motion information of the second obstacle based on the initial motion information of the second obstacle, a cost of the second motion information of the second obstacle, and the first motion information of the first obstacle.

In the foregoing implementation, cost evaluation may be performed when the motion information of the second obstacle is updated, so that motion information with a lower adjustment cost can be selected as the second motion information of the second obstacle as much as possible, thereby improving reasonableness of the generated scenario.

Optionally, the cost of the second motion information includes at least one of an authenticity cost, a smoothness cost, an obstacle avoidance cost, a scenario design cost, and the like.

Specifically, the second motion information includes a second movement trajectory of the second obstacle, and the second movement trajectory includes a plurality of trajectory points. The authenticity cost indicates a difference between the second motion information of the second obstacle and the initial motion information of the second obstacle, and the authenticity cost is related to coordinates, orientations, curvatures, and speeds of the plurality of trajectory points. The smoothness cost indicates smoothness of position changes of the plurality of trajectory point, and the smoothness cost is related to a curvature and an acceleration of the second movement trajectory. The obstacle avoidance cost indicates an obstacle avoidance amplitude of the second obstacle. The scenario design cost is a predefined scenario design cost. For example, the scenario design cost is a cost incurred for flexibly adjusting a vehicle to make decisions in different test scenarios. For example, a corresponding scenario design cost may be predefined for a hard case scenario, a special weather scenario, or a special terrain scenario.

With reference to the first aspect, in still another possible implementation of the first aspect, the cost $J_i$ of the second motion information of the second obstacle is represented by using the following formula:

$$ J_i = W_X (X_i - X^{ref})^2 + W_k k_i{}^2 + W_u u_i{}^2 + W_a a_i{}^2 + W_s slack_i{}^2 + W_f f_{hard}{}^2 $$

$X_i$ represents second motion information of a second obstacle i. The second motion information of the second obstacle i may include a plurality of trajectory points. For example, if a quantity of trajectory points is represented as m, the second motion information may be represented by positions, orientations, curvatures, and speeds of the m trajectory points. That is, the second motion information of the second obstacle $X_i = [x_i^1, y_i^1, phi_i^1, k_i^1, v_i^1, ..., x_i^m, y_i^m, phi_i^m, k_i^m, v_i^m]$ , where m is the quantity of trajectory points, and [x, y, phi, k, v] are respectively a horizontal coordinate, a vertical coordinate, an orientation angle, a curvature, and a speed of the trajectory point.

$W_X$, $W_k$, $W_u$, $W_a$, $W_s$, $W_f$ represent coefficients. $W_X (X_i - X^{ref})^2$ is an authenticity cost, and $X^{ref}$ is·initial motion information of the second obstacle i, and may also include positions, orientations, curvatures, speeds, and the like of the plurality of trajectory points. Details are not described herein again. $W_k k_i^2 + W_u u_i^2 + W_a a_i^2$ is a smoothness cost, $k_i$ represents a curvature of the second obstacle i, $a_i$ is an acceleration of the second obstacle i, $u_i$ is a curvature derivative of the second obstacle i (or a change rate of the curvature), $W_s slack_i^2$ is an obstacle avoidance cost, and $W_f f_{hard}^2$ is a scenario design cost, where a hard case cost herein is a design cost in a hard case scenario.

With reference to the first aspect, in still another possible implementation of the first aspect, the second motion information meets one or more of the following constraint conditions: a kinematics constraint, a collision constraint, or a travel specification constraint, where

the kinematics constraint indicates a value range of one or more of the following behavior parameters in the second motion information: a speed, an acceleration, a curvature of a movement trajectory, and a change rate of the curvature of the movement trajectory;
the collision constraint is used to constrain the second obstacle from colliding with the ego vehicle and the obstacle in the first driving scenario; and
the travel specification constraint is used to constrain the behavior of the first obstacle to meet a predefined travel specification.

With reference to the first aspect, in still another possible implementation of the first aspect, the scenario data of the first driving scenario further includes initial motion information of a fourth obstacle, and the fourth obstacle does not interact with the ego vehicle and the first obstacle. Generating the target driving scenario based on the first motion information of the first obstacle and the second motion information of the second obstacle includes:
generating the target driving scenario based on the first motion information of the first obstacle, the second motion information of the second obstacle, and the initial motion information of the fourth obstacle.

According to a second aspect, an embodiment of this application provides a scenario generation apparatus, where the scenario generation apparatus includes a data obtaining unit and a processing unit. The scenario generation apparatus is configured to implement the method according to any one of the first aspect.

According to a third aspect, an embodiment of this application provides a compute device, where the compute device includes a memory and a processor, the memory is configured to store program instructions, and when the processor executes the program instructions in the memory, the compute device is enabled to implement the method according to any one of the implementations of the first aspect.

According to a fourth aspect, an embodiment of this application provides a computer-readable storage medium, where the computer-readable storage medium stores instructions, and when the instructions are executed by at least one processor, the method according to any one of the first aspect is implemented.

According to a fifth aspect, this application provides a computer program product, where the computer program product includes computer instructions, and when the instructions are executed by at least one processor, the method according to any one of the implementations of the first aspect is implemented.

Optionally, the computer program product may be a software installation package. The device or the apparatus may download the computer program product and execute the computer program product on the device or the apparatus, to implement the foregoing method.

For beneficial effect of the technical solutions provided in the second to the fifth aspects of this application, refer to beneficial effect of the technical solution in the first aspect. Details are not described herein again.

BRIEF DESCRIPTION OF DRAWINGS

The following briefly describes accompanying drawings used in describing embodiments.

FIG. 1 is a diagram of a scenario of a road testing data collection system;
FIG. 2 is a diagram of an architecture of a scenario generation system according to an embodiment of this application;
FIG. 3 is a schematic flowchart of a scenario generation method according to an embodiment of this application;
FIG. 4 is a diagram of a driving scenario according to an embodiment of this application;
FIG. 5 is a diagram of an obstacle type according to an embodiment of this application;
FIG. 6A and FIG. 6B are diagrams of two trajectory interaction points according to an embodiment of this application;
FIG. 7A and FIG. 7B are diagrams of two motion processes of an ego vehicle and a first obstacle according to an embodiment of this application;
FIG. 8 is a diagram of an interaction phase of a cut-in scenario according to an embodiment of this application;
FIG. 9 is a diagram of a trajectory change according to an embodiment of this application;
FIG. 10 is a diagram of a scenario of updating motion information of an obstacle according to an embodiment of this application;
FIG. 11A is a diagram of another scenario of updating motion information of an obstacle according to an embodiment of this application;
FIG. 11B is a diagram of another scenario of updating motion information of an obstacle according to an embodiment of this application;
FIG. 12 is a diagram of a target driving scenario according to an embodiment of this application;
FIG. 13 is a diagram of a structure of a scenario generation apparatus according to an embodiment of this application;

and

FIG. 14 is a diagram of a structure of a compute device according to an embodiment of this application.

DESCRIPTION OF EMBODIMENTS

Before embodiments of this application are described, terms that may be used in embodiments of this application are first described.

1. An obstacle is an entity, for example, an object, a terrain, or a facility, that may delay or hinder movement of a terminal during movement of the terminal. The object may include a living object or an inanimate object. In addition, a position of the obstacle may be fixed or moving.

2. Intelligent driving, or referred to as autonomous driving, is a computer system that identifies or detects an object by using data collected by a sensing system (for example, a plurality of sensors), forms a result through calculation and analysis, and controls a terminal or assists a human driver or another decision-making entity in controlling the terminal. An intelligent driving algorithm is an algorithm that can process data to form an output result. The output result may be directly used to control a vehicle, and/or is used to assist another decision-making entity (for example, a human driver) in controlling a vehicle. For example, the output result includes but is not limited to one or more of an obstacle identification result, path planning, behavior decision-making (for example, a behavior such as vehicle following, braking, or steering), and motion planning (for example, accelerating or decelerating). In some solutions, the intelligent driving algorithm is integrated into an intelligent driving system, and meanings of the intelligent driving algorithm and the intelligent driving system may be interchangeable.

3. An ego vehicle is a vehicle that is observed during a test, evaluation, or demonstration. Optionally, the ego vehicle in this specification may be a test vehicle (or referred to as a tested vehicle), or may be any vehicle having a function of a sensing system. In some cases, an intelligent driving algorithm, a sensing algorithm, or the like may be tested through a vehicle test. For example, when the intelligent driving algorithm is tested, a behavior and an action performed by the ego vehicle may be considered as a behavior and an action performed by the intelligent driving algorithm. In other words, the ego vehicle in this specification may be considered as the vehicle itself, or may be considered as the intelligent driving algorithm.

The foregoing terms may be optionally applied in the following embodiments.

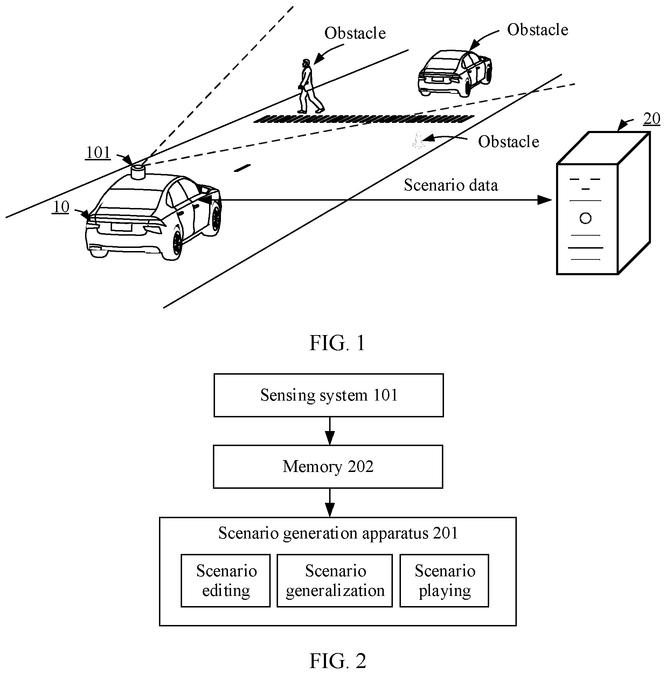

The following first describes a collection scenario of scenario data used in this application. FIG. 1 is a diagram of a scenario of a road testing data collection system, including a vehicle 10 and a compute device 20. The vehicle 10 may include a sensing system 101. The sensing system 101 includes but is not limited to one or more of a camera, a millimeter-wave radar, a lidar, an ultrasonic radar, and the like, and a position sensor, a pose sensor, and the like. An intelligent driving algorithm may be further disposed on the vehicle 10.

When the vehicle 10 is traveling, the sensing system 101 may collect scenario data in the traveling process. The scenario information may include detection data of an obstacle in a scenario. As shown in FIG. 1, the obstacle herein is an object in a driving scenario. For example, the obstacle may include an inanimate object, for example, another vehicle or a roadblock. For another example, the obstacle may include a living object, for example, a pedestrian or an animal.

The scenario data collected in the traveling process may be provided to the compute device 20. The compute device 20 is an apparatus having a data processing capability, and can generate a scenario based on the scenario data. The generated scenario may be considered as simulation of a traveling environment of the vehicle, and may be used to test an algorithm, an apparatus, or the like, or may be used as model training data. For example, the generated scenario may be used to test the intelligent driving algorithm. For another example, the generated scenario may be used to test a detection apparatus, for example, a lidar or a millimeter-wave radar. For another example, the generated scenario may be used to train a model such as an obstacle identification model.

Optionally, the compute device may be a physical device, for example, one or more of a host, a notebook computer, a handheld terminal, an equipment room device, or a server. Alternatively, the compute device may be a virtual device. For example, the compute device may be a virtual machine, a container, a cloud, or the like. The foregoing server includes but is not limited to a general-purpose computer, a cloud server, a blade server, or the like. When a function of the compute device is implemented by a server, the compute device may include one or more servers (for example, a server cluster). The virtual machine is a virtualized computing module. The cloud is a software platform that uses an application virtualization technology, and can enable one or more pieces of software and applications to be developed and run in an independent virtualized environment. Optionally, the cloud may be deployed on a public cloud, a private cloud, a hybrid cloud, or the like.

In some solutions, the compute device may include a processor, where the processor includes but is not limited to a central processing unit, a picture processor, an artificial intelligence processor, a microprocessor, a programmable logic gate array, or the like.

FIG. 2 is a diagram of an architecture of a scenario generation system according to an embodiment of this application. The scenario generation system includes a sensing system 101 and a scenario generation apparatus 201.

The sensing system 101 is configured to sense, in a real-time road testing, environment information (such as position and speed information of a surrounding vehicle, a pedestrian, or a bicycle, traffic light information, and curb fence information) around an autonomous vehicle. For further details, refer to the related descriptions in FIG. 1.

The scenario generation apparatus 201 is an apparatus having a data processing capability, and can implement one or more operations of editing, updating (for example, modification or generalization), playing, and the like of a scenario. In some solutions, the foregoing operations may be integrated into a simulator. Therefore, the scenario generation apparatus 201 in this solution may be a simulator, for example, an autonomous driving simulator.

In a possible implementation, the scenario generation apparatus 201 may include one or more of a scenario editing module, a scenario generalization module, and a scenario playing module. The module herein is used to describe a function of the scenario generation apparatus, and is not used to limit a structure of the scenario generation module. The scenario editing module is configured to update an obstacle in the scenario, for example, edit motion information (such as a movement trajectory, a position, a speed, an acceleration, an orientation, and an action) of the obstacle in the scenario. The scenario generalization module is configured to generate trajectories or behavior parameters of obstacles in batches (for example, obtain a plurality of derived trajectory points through generalization of one trajectory point). The scenario generalization module may perform generalization modification on a single piece of scenario data to obtain a batch of new scenarios. The behavior parameter indicates a parameter that can describe a behavior (behavior) or a state of the obstacle, for example, one or more parameters of a speed, an acceleration, a curvature, a displacement, and a motion manner (for example, a uniform motion, an acceleration motion until acceleration to a target speed, or a deceleration motion until deceleration to a target speed), and may further include a parameter derived from the foregoing one or more parameters, for example, a change rate of the curvature. The scenario playing module is mainly configured to simulate and reproduce an existing driving scenario, for example, play, based on a motion timeline of an obstacle in the scenario, a picture in which an object in the scenario changes with time.

Optionally, the scenario generation system may further include a memory 202. The memory 202 may store data from the sensing system 101, for example, perform structured storage on information sensed by a vehicle-mounted sensor. Further, the memory 202 may be disposed in the scenario generation apparatus 201. In some solutions, the scenario generation apparatus 201 and the memory 202 may be included in a compute device 20 for implementation.

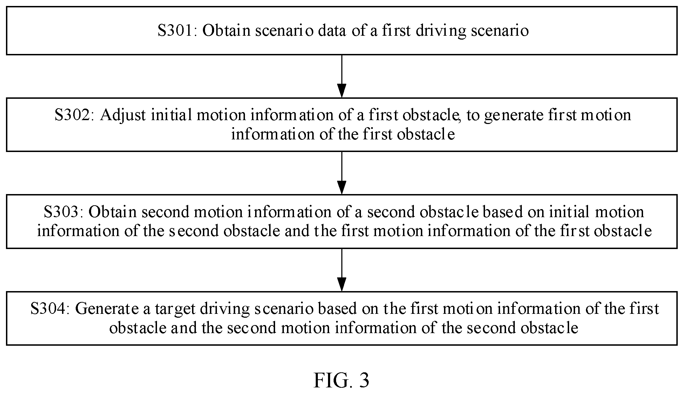

The following describes the method in embodiments of this application. FIG. 3 is a schematic flowchart of a scenario generation method according to an embodiment of this application. Optionally, the method is applied to the compute device 20 shown in FIG. 1, or is applied to the scenario generation apparatus 201 shown in FIG. 2. For ease of description, the following uses an example in which the execution body is the scenario generation apparatus for description.

The scenario generation method shown in FIG. 3 may include one or more steps in step S301 to step S304. It should be understood that, for ease of description, a sequence of S301 to S304 is used for description herein, but this is not intended to constitute a limitation that the method is necessarily performed in the foregoing sequence. An execution order, execution time, a quantity of execution times, and the like of the foregoing one or more steps are not limited in embodiments of this application. S301 to S304 are specifically as follows:

Step S301: Obtain scenario data of a first driving scenario.

The driving scenario, or a scenario for short, is usually a sequence of scenes, and can be used to describe interaction between an ego vehicle and another object when the ego vehicle performs a driving task. The scene is a snapshot of an entity, and may include an expression of the entity itself, a relationship between entities, and the like. The entity includes but is not limited to one or more of an ego vehicle, a static scene, a dynamic environment, an actor, an observer, and the like. For example, the driving scenario may include one or more of the following scenarios: the ego vehicle traveling through a road, the ego vehicle passing through an intersection and interacting with a social vehicle and a pedestrian, overtaking, turning, lane changing, or the like. It should be understood that the foregoing meaning explanation and examples are used to facilitate understanding of the scene and the scenario, and are not intended to limit this solution. In addition, the first driving scenario is a distinguishing description for ease of describing the driving scenario. Optionally, the first driving scenario may be a scenario actually experienced by the ego vehicle in a road testing process or a simulation scenario obtained by processing an actually experienced scenario. In this case, the scenario data of the first driving scenario may be real road testing data. For a collection process of the scenario data, refer to FIG. 1. Alternatively, the first driving scenario may be a simulation scenario obtained through manual or automatic editing.

The first driving scenario includes an obstacle, and the obstacle is an entity that may affect a moving process of the ego vehicle in the first driving scenario. It should be noted that the obstacle may not actually affect a moving process of the ego vehicle, but the obstacle has a possibility or capability of affecting the moving process of the ego vehicle. In this application, there may be a plurality of obstacles in the first driving scenario. For example, the driving scenario shown in FIG. 1 includes obstacles such as a preceding vehicle, a roadblock, and a pedestrian.

The scenario data of the first driving scenario may indicate motion information of an entity in the first driving scenario. The entity herein includes one or more of the foregoing obstacle, ego vehicle, and the like. For ease of distinguishing, the motion information indicated by the scenario data is referred to as initial motion information. The motion information, or referred to as action (action) information or activity (activity) information, includes information used to describe a behavior (behavior) and/or an act (act) of the entity, which is referred to herein as the motion information in consideration that the behavior or the act may have an attribute at a temporal scale. For example, the behavior may be a behavior in a broad sense, including a behavior (for example, a behavior of acceleration or lane-change) or a state (for example, a current vehicle speed or a current position of a vehicle) at a specific time point. Alternatively, the behavior (or act) may include a process of behavior in a period of time (for example, accelerating until a vehicle speed reaches a target speed). In some scenarios, the behavior and the act may be interchangeable. In summary, the motion information may describe a motion process of the entity in the scenario and/or a state of the entity at any moment in the motion process.

For example, the initial motion information may include one or more of the following parameters: one or more of a trajectory, a trajectory point, a position, an orientation, an action, a behavior parameter, and the like. The behavior parameter is a parameter that describes a behavior, an action, or a state of an object, for example, may include one or more of a speed, an acceleration, a curvature, a displacement, a motion manner (for example, a uniform motion, an acceleration motion until acceleration to a target speed, or a deceleration motion until deceleration to a target speed), and the like. In some solutions, one or more of the foregoing trajectory, trajectory point, position, orientation, or action may also be included in the behavior parameter. It should be noted that, the motion information may further include a change of the foregoing parameter with time. For example, the trajectory may be represented by trajectory points (or referred to as position points) at a plurality of moments, or the trajectory may be represented by trajectory points, speeds, velocity directions, and the like at a plurality of moments.

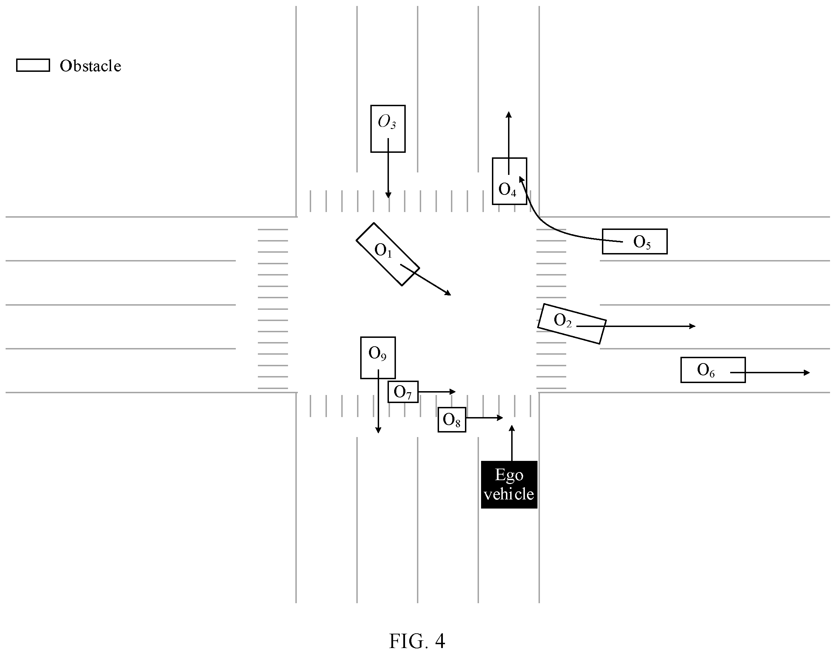

FIG. 4 is a diagram of a driving scenario according to an embodiment of this application. The driving scenario includes a plurality of obstacles, which are respectively represented as obstacles $o_1$ to $o_9$. Scenario data of the driving scenario may indicate a traveling trajectory (or a position at a moment), a traveling direction, and a speed of the obstacle, or a traveling trajectory (or a position at a moment), a traveling direction, and a speed of the obstacle may be obtained by processing (for example, logsim processing) scenario data of the driving scenario.

In this solution, a plurality of obstacles in a first driving scenario may correspond to different processing manners. For example, the first driving scenario includes a first obstacle and a second obstacle. The first obstacle and the second obstacle may be processed in different processing manners, to construct a target driving scenario. It may be understood that the first obstacle and the second obstacle described in this specification are obstacles in a same driving scenario.

In a possible implementation, an attribute or feature difference exists between the first obstacle and the second obstacle. The following describes the first obstacle and the second obstacle by using an example.

Case 1: The first obstacle and the second obstacle have different degrees of interaction with an ego vehicle. For example, a degree of interaction between the first obstacle and the ego vehicle is not lower than a degree of interaction between the second obstacle and the ego vehicle.

The degree of interaction may indicate a degree of impact of an obstacle on traveling of the ego vehicle in a period of time. With reference to FIG. 4, a motion change of the obstacle $o_8$ may cause great impact on traveling of the ego vehicle. For example, if the obstacle $o_8$ speed is high, the ego vehicle needs to decelerate in time to avoid collision; or if the obstacle $o_8$ stops at a position far away from the ego vehicle, the ego vehicle may keep traveling at a specific speed through the intersection.

In some possible cases, obstacles in the first driving scenario may be classified into different types based on the degree of interaction. For example, an obstacle type may be determined based on a degree of interaction between an obstacle and the ego vehicle and a degree of interaction between obstacles in the first driving scenario. For example, the obstacle type includes a first-type obstacle and a second-type obstacle, and a degree of interaction between the first-type obstacle and the ego vehicle is higher than a degree of interaction between the second-type obstacle and the ego vehicle. Further, a degree of interaction between entities in the first driving scenario may be determined based on the scenario data of the first driving scenario, where the interaction between entities may include interaction between an obstacle and the ego vehicle, interaction between obstacles, and the like. Optionally, determining of the degree of interaction may be automatically identified by using an interaction degree calculation algorithm. For example, the degree of interaction between entities may be determined based on a rule-based (rule base) method (for example, determining a sequence of arriving at a trajectory interaction point) or a learning-based (learning base) method.

The following lists several rule-based interaction degree determining methods as examples. In some solutions, the degree of interaction between the obstacle and the ego vehicle may be indicated by using a degree of overlapping between a movement trajectory of the obstacle and a movement trajectory of the ego vehicle in terms of time and space. For example, if a position of the obstacle is closer to a position of the ego vehicle at a moment or in a time period during traveling of the ego vehicle, a degree of interaction between the obstacle and the ego vehicle is higher. For another example, when a trajectory interaction point exists between the ego vehicle and the obstacle, if time at which the ego vehicle passes through the trajectory interaction point is closer to time at which the obstacle passes through the trajectory interaction point, a degree of interaction between the obstacle and the ego vehicle is higher. With reference to FIG. 4, the ego vehicle is a straight-through vehicle, and a spatial interaction point exists between a trajectory of the ego vehicle and a trajectory of the obstacle $o_6$, that is, both the ego vehicle and the obstacle $o_6$ pass through a crossroad. However, before the ego vehicle travels to the crossroad, the obstacle $o_6$ has traveled through the crossroad. That is, although the trajectories of the ego vehicle and the obstacle $o_6$ overlap, an interval between a moment at which the ego vehicle passes through the trajectory overlapping position and a moment at which the obstacle $o_6$ passes through the trajectory overlapping position is long. Therefore, the obstacle $o_6$ may be considered as having no interaction with the ego vehicle. Similarly, a degree of interaction between the obstacle $o_2$ and the ego vehicle is stronger than that between the obstacle $o_6$ and the ego vehicle. However, an interaction point exists between a trajectory of the obstacle $o_1$ and a trajectory of the ego vehicle, and time at which the obstacle $o_1$ passes through the interaction point is close to time at which the ego vehicle passes through the interaction point. Therefore, a degree of interaction between the obstacle $o_1$ and the ego vehicle is high. The learning-based method may be an interaction degree determining method obtained by training a model through data training by using reinforcement learning, deep learning, a neural network, or the like.

In some possible cases, the first obstacle belongs to the first-type obstacle, the second obstacle is an obstacle that has interaction with the first obstacle, and/or the second obstacle is an obstacle that has interaction with the ego vehicle other than the first obstacle.

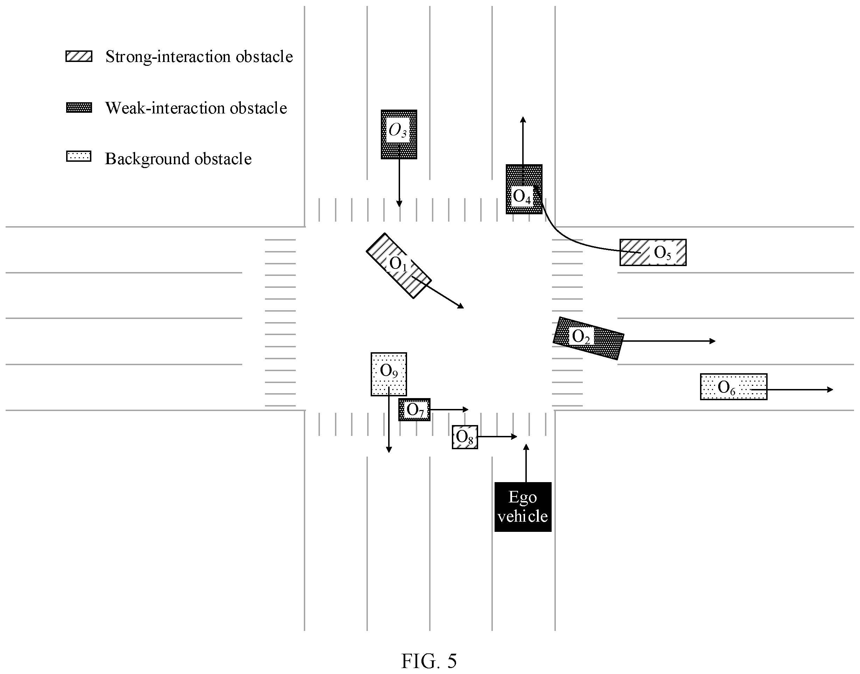

In some possible cases, the first obstacle belongs to the first-type obstacle, and the second obstacle includes an obstacle in the second-type obstacle and/or includes an obstacle other than the first obstacle in the first-type obstacle. Further, the first-type obstacle may be referred to as a strong-interaction obstacle, and the second-type obstacle may be referred to as a weak-interaction obstacle. FIG. 5 is a diagram of an obstacle type according to an embodiment of this application. A first driving scenario may include strong-interaction obstacles $o_1$, $o_5$, and $o_8$, weak-interaction obstacles $o_2$, $o_3$, $o_4$, and $o_7$, and no-interaction obstacles $o_6$ and $o_9$. It should be understood that the strong/weak herein may be absolute. For example, some solutions support using a quantitative criterion to evaluate strong/weak interaction between an obstacle and an ego vehicle. Alternatively, the strong/weak may be relative. For example, some solutions in this application support sorting degrees of interaction between obstacles in the first driving scenario and the ego vehicle, first N obstacles with high degrees of interaction are used as strong-interaction obstacles, and first N+1 to M are weak-interaction obstacles, where both N and M are positive integers, and M>N.

In some possible cases, the obstacle in the first driving scenario includes a first-type obstacle and a second-type obstacle. The first-type obstacle is an obstacle whose degree of interaction with the ego vehicle meets a first condition. The second-type obstacle includes an obstacle whose degree of interaction with the ego vehicle meets a second condition and/or an obstacle that has interaction with a third obstacle, the third obstacle is at least one obstacle in the first-type obstacle, and the first condition is different from the second condition.

The following describes in detail the first condition, the second condition, and a condition indicating that interaction exists between two obstacles.

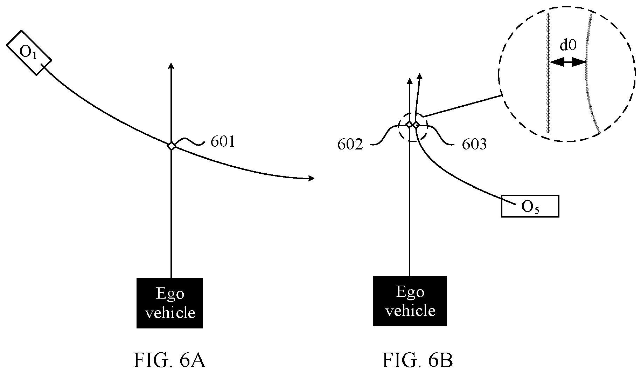

Design 1: The first condition includes that a time interval between an obstacle passing through a trajectory interaction point and the ego vehicle passing through the trajectory interaction point is in a first duration range. The trajectory interaction point herein may be a trajectory overlapping point, or a position at which a distance between trajectories of the obstacle and the ego vehicle is less than or less than a distance threshold. FIG. 6A and FIG. 6B are diagrams of two trajectory interaction points according to an embodiment of this application. As shown in FIG. 6A, an overlapping position exists between a trajectory of an obstacle $o_1$ and a trajectory of an ego vehicle, and the overlapping position is an interaction point 601. As shown in FIG. 6B, a trajectory of an obstacle $o_5$ does not overlap a trajectory of the ego vehicle, and a shortest distance between the two trajectories is d0. If d0 is less than a preset distance threshold, points on the two trajectories corresponding to the distance are trajectory interaction points. In other words, a position 602 and a position 603 are respectively located on the trajectories of the ego vehicle and the obstacle $o_5$, and a distance between the position 602 and the position 603 is less than the preset distance threshold. In this case, the position 602 and the position 603 are respectively used as trajectory interaction points between the ego vehicle and the obstacle $o_5$ and between the obstacle $o_5$ and the ego vehicle. The distance threshold may be preset or customized, for example, a distance of 5 meters (m), 3 m, or 1 m.

For example, a first duration range may be a range less than or equal to or less than first duration, for example, less than 5 seconds (s) or less than or equal to 7 s. With reference to FIG. 6A, that the first duration range is a range less than or equal to 5 s is used as an example. If a moment at which the ego vehicle passes through a trajectory interaction point 601 is t1, and a moment at which the obstacle $o_1$ passes through the trajectory interaction point 601 is t2, if a time interval between t2 and t1 is less than or equal to 5 s, the obstacle $o_1$ is a first-type obstacle. Further, the first duration range may also have a lower bound. For example, the first duration range may be a range greater than or equal to or greater than second duration and less than or equal to or less than the first duration. For example, the first duration range may be (0.5s, 5s]. In some cases, a duration range less than or equal to 0.5 s may be used to determine another type of obstacle.

The second condition includes that a time interval between an obstacle passing through a trajectory interaction point and the ego vehicle passing through the trajectory interaction point is in a second duration range, and a lower bound of the second duration range is greater than an upper bound of the first duration range. For example, the second duration range may be a duration range greater than or equal to or greater than the third duration, where the third duration is greater than or equal to the first duration. For example, the first duration range is less than 5 s, and the second duration range is greater than or equal to 5 s. Further, the second condition may also include an upper bound. For example, the second duration range may be (5s, 12s].

When an obstacle and a third obstacle meet the following conditions, interaction exists between the obstacle and the third obstacle: a trajectory interaction point exists between the obstacle and the third obstacle, and a time interval between the obstacle passing through the trajectory interaction point and the third obstacle passing through the trajectory interaction point is in a third duration range. For example, the third duration range is a range less than or equal to fourth duration, for example, less than 3 s or 5 s. For another example, the third duration range may also include a lower bound, that is, greater than or greater than fifth duration. For example, the fourth duration range is [0.5, 3s].

Design 2: The first condition includes that a trajectory interaction point exists between a movement trajectory of an obstacle and a movement trajectory of the ego vehicle, a first time interval between the obstacle passing through the trajectory interaction point and the ego vehicle passing through the trajectory interaction point is first N time intervals in a time interval sequence, and N is an integer greater than 0.

The time interval sequence includes M time intervals sequentially arranged by duration, each of the M time intervals is an interval between a moment at which an obstacle interacting with the ego vehicle passes through a first trajectory interaction point of the ego vehicle and a moment at which the ego vehicle passes through the first trajectory interaction point, and the obstacle interacting with the ego vehicle is an obstacle that has a trajectory interaction point with the ego vehicle in a first driving scenario. Table 1 shows an interaction relationship between an obstacle and the ego vehicle in the first driving scenario according to an embodiment of this application. The first driving scenario is the driving scenario in FIG. 4. Obstacles $o_3$ and $o_9$ do not have trajectory interaction points with the ego vehicle, and can be regarded as no interaction with the ego vehicle. Other obstacles, that is, obstacles $o_1$, $o_2$, $o_4$, $o_5$, $o_6$, $o_7$, and $o_8$, all have trajectory interaction points with the ego vehicle. Therefore, the foregoing obstacles belong to obstacles interacting with the ego vehicle. Time intervals between moments at which the obstacles interacting with the ego vehicle pass through respective trajectory interaction points with the ego vehicle and moments at which the ego vehicle passes through the corresponding trajectory interaction points are shown in Table 1. The time intervals may be sorted in ascending order of duration to form the following sequence (for ease of description, obstacles corresponding to the time intervals are specified in brackets): 1.50 s ($o_1$), 2.80 s ($o_5$), 3 s ($o_8$), 5.01 s ($o_2$), 5.12 s ($o_4$), 5.15 s ($o_7$), and 12.50 s ($o_6$). In this case, M=7. Obstacles ranking top 3 (that is, N=3) in the time interval are first-type obstacles, that is, obstacles $o_1$, $o_5$, and $o_8$ are first-type obstacles. It is not difficult to learn that the first N time intervals in the time interval sequence are less than (or less than or equal to) a time interval other than the first N time intervals in the time interval sequence. It should be understood that the foregoing order is merely an example. If sorting is performed in descending order, the first obstacle is the sorted N obstacles and is the first-type obstacle.

Table 1

| Identifier of an obstacle | Whether there is a trajectory interaction point with the ego vehicle | Time interval of passing through the trajectory interaction point |
|---|---|---|
| Obstacle $o_1$ | Yes | 1.50 s |
| Obstacle $o_2$ | Yes | 5.01 s |
| Obstacle $o_3$ | No | - |
| Obstacle $o_4$ | Yes | 5.12 s |
| Obstacle $o_5$ | Yes | 2.80 s |
| Obstacle $o_6$ | Yes | 12.50 s |
| Obstacle $o_7$ | Yes | 5.15 s |
| Obstacle $o_8$ | Yes | 3 s |
| Obstacle $o_9$ | No | - |

Further, the second condition includes that a trajectory interaction point exists between a movement trajectory of an obstacle and a movement trajectory of the ego vehicle, a first time interval between the obstacle passing through the trajectory interaction point and the ego vehicle passing through the trajectory interaction point is in first N+1 to K time intervals in the time interval sequence, K is an integer, K>N, and M≥K or M>K. With further reference to Table 1, the second-type obstacle may include first four to six obstacles, that is, N=3 and K=6, that is, the second-type obstacle may be obstacles $o_2$, $o_4$, and $o_7$.

Further, the second-type obstacle may further include an obstacle that has interaction with the first-type obstacle, and the third obstacle is at least one obstacle in the first-type obstacle. The obstacle having interaction herein may include, for example, an obstacle that meets at least one of the following two conditions: A trajectory interaction point exists between the obstacle and the third obstacle, and a time interval between the obstacle passing through the trajectory interaction point and the third obstacle passing through the trajectory interaction point is in a third duration range, for example, the third duration range is 0 s to 3 s; or a plurality of obstacles may be sorted by degrees of interaction between the plurality of obstacles and the third obstacle, so that one or more obstacles are selected as obstacles having interaction with the third obstacle in descending order of degrees of interaction.

For example, with reference to FIG. 4, Case 1 is used as an example. The third obstacle may be the obstacle $o_1$ ($o_1$ is the first-type obstacle), a trajectory interaction point exists between the obstacle $o_1$ and the obstacle $o_3$, and a time interval between the obstacle $o_1$ passing through the trajectory interaction point and the obstacle $o_3$ passing through the trajectory interaction point is less than fourth duration (for example, 5 s). In this case, interaction exists between the obstacle $o_1$ and the obstacle $o_3$. Therefore, the obstacle $o_3$ belongs to the second-type obstacle.

It should be understood that the foregoing two designs are intended to facilitate description of obstacle classification. Therefore, two designs for distinguishing obstacle types are described as examples. The foregoing two designs may be further combined. A combination example is as follows: Obstacles corresponding to the first N time intervals that are in the first time range and that are selected from the M time intervals as the first-type obstacles. When a quantity of time intervals that are in the first time range is less than N, only an obstacle whose corresponding time interval is in the first time range is selected as the first-type obstacle. Certainly, in a specific implementation process, there may be other combined designs, and examples are not provided herein.

In some possible cases, the obstacle in the first driving scenario may further include a third-type obstacle, which may also be referred to as a background obstacle. The third-type obstacle does not interact with the ego vehicle, and does not interact with the first-type obstacle. For example, no trajectory interaction point exists between the third-type obstacle and the ego vehicle, and no trajectory interaction point exists between the third-type obstacle and the first-type obstacle. With reference to the foregoing design 1, if a trajectory interaction point exists between the obstacle $o_6$ and the ego vehicle, but time of passing through the trajectory interaction is greater than an upper bound (that is, 12 s) of the second duration range, the obstacle $o_6$ belongs to the third-type obstacle; or with reference to the foregoing design 2, if a trajectory interaction point exists between the obstacle $o_6$ and the ego vehicle, but a time interval of passing through the trajectory interaction does not belong to the first K time intervals, the obstacle $o_6$ belongs to the third-type obstacle. The obstacle $o_9$ has no trajectory interaction point with the ego vehicle, and has no trajectory interaction point with the first-type obstacle, and is therefore the third-type obstacle. In some possible cases, the third-type obstacle may alternatively be an obstacle other than the ego vehicle, the first-type obstacle, and the second-type obstacle in the first driving scenario.

Optionally, the movement trajectory used for determining the interaction type may be a movement trajectory in a predefined time period. For example, the ego vehicle may continuously travel, and the first driving scenario may be a scenario in a local time period in duration of continuous travel.

Case 2: The first obstacle and the second obstacle correspond to different degrees of interest. The degree of interest is determined by a user or by using an algorithm. For example, the first obstacle is an obstacle selected by the user. Because the first obstacle is selected (for example, selected or edited) by the user, the first obstacle has a higher degree of interest than another obstacle. For another example, both the first obstacle and the second obstacle are obstacles selected by the user, but a movement trajectory of the first obstacle may be freely edited, and a trajectory of the second obstacle does not need to be edited by the user. In this case, the first obstacle has a higher degree of interest than the second obstacle.

In a possible implementation, the first obstacle may be selected by a user or by using an algorithm (for example, a rule-based obstacle selection algorithm or a machine-learning-based obstacle selection algorithm). For example, the user selects a rabbit obstacle, also referred to as an actor vehicle, from a plurality of obstacles in the first driving scenario, and the user may control the rabbit obstacle, so that the rabbit obstacle performs a designed interaction action with the ego vehicle. In this case, a scenario generation apparatus may receive a selection operation or an editing operation performed by the user on an obstacle or several obstacles, and the selected obstacle is the first obstacle.

Optionally, in this case, the second obstacle may be specified by the user, or may be automatically determined. For example, the user may alternatively select some obstacles from the plurality of obstacles as the second obstacles. For another example, the second obstacle may be determined in the following manner: When a trajectory of a specified rabbit obstacle changes, an obstacle that may have a trajectory conflict with the rabbit obstacle is used as the second obstacle, or an obstacle that may have a trajectory conflict with the ego vehicle other than the first obstacle is used as the second obstacle. In other words, the second obstacle is an obstacle that has interaction with the first obstacle, or the second obstacle is an obstacle that has interaction with the ego vehicle other than the first obstacle.

Further, in Case 2, in addition to the first obstacle and the second obstacle, the first driving scenario may further include a background obstacle, and the background obstacle is an obstacle that does not interact with the first obstacle and the ego vehicle. In some implementations, the background obstacle may be an obstacle other than the ego vehicle, the first obstacle, and the second obstacle in the first driving scenario.

Case 3: The first obstacle may alternatively be any obstacle in the first driving scenario, and the second obstacle is an obstacle that has interaction with the first obstacle, or the second obstacle is an obstacle that has interaction with the ego vehicle other than the first obstacle. Optionally, in this case, the first driving scenario may further include a background obstacle other than the ego vehicle, the first obstacle, and the second obstacle.

It should be understood that the foregoing three cases are examples for ease of understanding the obstacle, and are not used as a strict limitation on the solution. The foregoing two cases may be further combined. For example, the first obstacle may be a strong-interaction obstacle specified by the user, and the second obstacle may be a strong-interaction obstacle and/or a weak-interaction obstacle that has a trajectory conflict with the first obstacle.

It should be understood that the first obstacle may be one or more obstacles, and the second obstacle may also be one or more obstacles. In addition, with reference to the foregoing description of the driving scenario data, when the first driving scenario includes the first obstacle and the second obstacle, the scenario data of the first driving scenario may include initial motion information of the first obstacle and initial motion information of the second obstacle.

In a possible implementation, the first driving scenario may be obtained based on data collected during traveling of the ego vehicle, and the scenario data of the first driving scenario may further include motion information of the ego vehicle. Optionally, the initial motion information of the ego vehicle may be collected by using a sensor of the ego vehicle, for example, one or more of sensors such as a wheel speedometer, an inertial measurement unit, a positioning system, a radar sensor, and an image sensor.

Optionally, the scenario data of the driving scenario obtained in step S301 may be obtained through conversion based on sensor data (for example, the sensing system 101 shown in FIG. 1 and FIG. 2). For example, logsim processing is performed on the sensor data to obtain an obstacle in the first driving scenario and the motion information of the ego vehicle.

Step S302: Adjust the initial motion information of the first obstacle, to generate first motion information of the first obstacle.

Specifically, similar to the initial motion information, the first motion information may include one or more of the following parameters: one or more of a movement trajectory, a trajectory point, a position, an orientation, an action, a behavior parameter, and the like of the first obstacle.

The following describes an example of an implementation of adjusting the initial motion information of the first obstacle to obtain the first motion information.

Implementation 1: Adjust values or thresholds of the plurality of behavior parameters of the first obstacle, to generate the first motion information of the first obstacle. For description of the behavior parameter, refer to the foregoing description. The first motion information includes updated values of the plurality of behavior parameters and/or updated thresholds of the behavior parameters.

Updating a value of a parameter is used as an example. Refer to Table 2. The initial motion information may include values of parameters such as an absolute speed (for example, a target speed), a relative speed (for example, a speed relative to the ego vehicle), and a relative distance. An update indication may include new values (that is, updated values) of a part or all of parameters in the initial motion information. The scenario generation apparatus may obtain the first motion information based on the update indication. The first motion information includes new values of a part or all of parameters in the foregoing initial motion information. Certainly, when a value of a parameter is not updated, a value of the parameter in the first motion information is the same as a value in the initial motion information. For example, an updated value of an obstacle model in Table 2 is the same as a value in the initial motion information.

Table 2

| Initial motion information | Value | Updated value |
| --- | --- | --- |
| Target speed | v1 | v2 |
| Distance relative to the ego vehicle | d1 | d2 |
| Speed relative to the ego vehicle | vr1 | Vr2 |
| Obstacle model | Vehicle-following model | Vehicle-following model |
| ... | ... | ... |

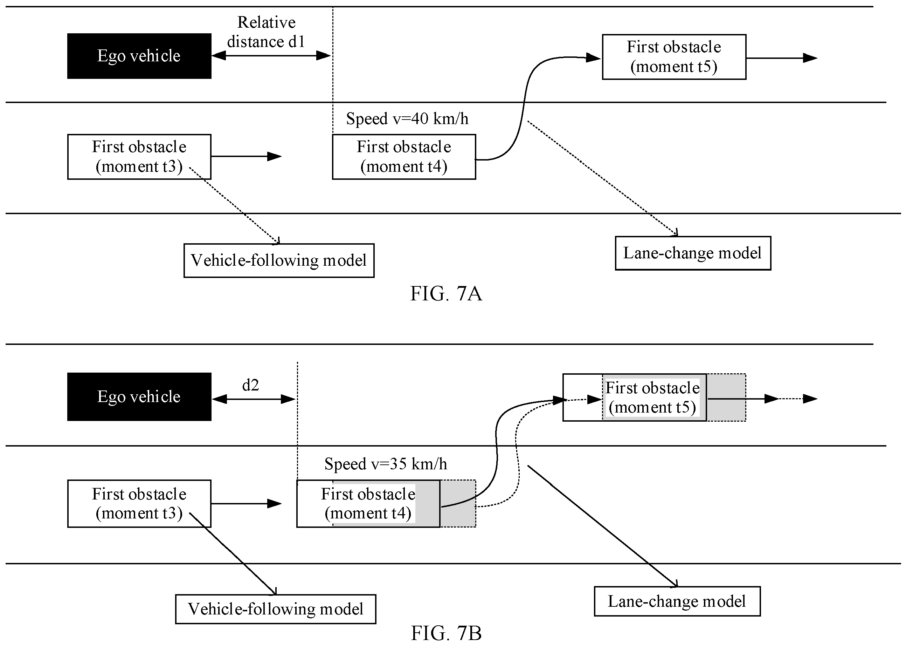

FIG. 7A and FIG. 7B are diagrams of two motion processes of the ego vehicle and the first obstacle according to an embodiment of this application. Refer to FIG. 7A. Motion information of the first obstacle may include a behavior parameter of the first obstacle at a moment t4, for example, a speed v=40 kilometers per hour (km/h). The behavior parameter may be adjusted. Refer to FIG. 7B. After the adjustment, a speed of the first obstacle at the moment t4 is 35 km/h. For another example, the motion information of the first obstacle may include a threshold of a lane-change behavior parameter of the first obstacle. Refer to FIG. 7A. In the first driving scenario, when a relative distance between the first obstacle and the ego vehicle reaches d1, the first obstacle performs a lane-change operation. Refer to FIG. 7B. The threshold of the relative distance may be updated to d2, and when the relative distance between the first obstacle and the ego vehicle is d2, the first obstacle performs a lane-change operation. Further, the obstacle model may also be changed. For example, the lane-change model after the moment t4 may be updated to an S-shaped turning model.

In a possible implementation, the initial motion information of the first obstacle includes a first action set and a first trigger set, and adjusting the initial motion information of the first obstacle includes adjusting a behavior parameter in the first action set and/or adjusting a value of a behavior parameter in the first trigger set. The first action set is used to describe a first action of the first obstacle, and includes a value of a first behavior parameter of the first action. The first trigger set is used to describe a condition for performing the first action. For example, the first action may include one or more of lane changing, overtaking, vehicle following, steering, braking, accelerating, decelerating, reversing, transitioning to a next action phase, and the like. It should be understood that a parameter in the first action set may be different from a parameter in the first trigger set. Table 3 shows information about behavior parameters that may be included in an action set according to an embodiment of this application. An action tag may indicate the behavior parameter. For a name and a meaning of the action tag, refer to descriptions in the first column of Table 3.

Table 3 Action set

| Action name (Action Name) | Action enumeration (Action Enum) | Action tag (Action Tag) |
|---|---|---|
| Set the ego vehicle speed to the target speed | 0 | objTargetSpeed |
| Set a social vehicle to travel at a speed relative to the ego vehicle | 1 | objectRelSpeed |
| Set a social vehicle to accelerate to the target speed | 2 | objTargetSpeed, objectAcc |
| Set a social vehicle to road speed limit | 3 | overspeedRatio |
| Set the lane-change for a social vehicle | 4 | 1.laneChangeDirection 2.laneChangeOffset 3.laneChangeTime 4.laneChangeAcc 5.laneKeepTime |
| Set model switching | 5 | modelType |

Table 4 shows information about behavior parameters that may be included in a trigger set according to an embodiment of this application. A condition tag indicates a behavior parameter in the trigger set. For a name and a meaning of the behavior parameter, refer to descriptions in the first column of Table 4.

Table 4 Trigger set

| Condition name (ConditionName) | Condition enumeration (ConditionEnum) | Condition tag (ConditionTag) | Example value: e.g |
|---|---|---|---|
| Trigger based on an ego vehicle speed | 0 | egoSpeedThreshold | 30 (km/h) |
| Trigger based on a relative speed between a social vehicle and the ego vehicle | 1 | relativeSpd | 30 (km/h) |
| Trigger based on a social vehicle distance from a start position | 2 | absoluteDistance | 30 (m) |
| Trigger based on a distance between a social vehicle and the ego vehicle | 3 | relativeDistance | 30 (m) |
| Trigger based on a longitudinal distance between a social vehicle and the ego vehicle along a lane | 4 | relDistAlongLane | 30 (m) |
| Trigger based on a remaining distance from a social vehicle to a destination | 6 | remainDistPercent | 30 (m) |

(continued)

| Condition name (ConditionName) | Condition enumeration (ConditionEnum) | Condition tag (ConditionTag) | Example value: e.g |
|---|---|---|---|
| Trigger based on a percentage of a remaining distance from a social vehicle to a destination | 7 | remainDistance | 0.5 (%) |
| Trigger based on traveling time of a social vehicle | 8 | durationTime | 10 (s) |

Correspondingly, the scenario generation apparatus adjusts the first action set and/or the first trigger set of the first obstacle, to generate the first motion information of the first obstacle. For example, with reference to FIG. 7A and FIG. 7B, the first action set may be an action set of the first obstacle at the moment t4, and the first action set may include an absolute speed (that is, objTargetSpeed in Table 3), a relative speed (that is, objectRelSpeed in Table 3), and accelerating to the target speed (that is, objTargetSpeed and objectAcc in Table 3). Further, a lane-change manner of the first obstacle may be selected, an interaction model met by the first obstacle may be set, and the like. After the value of the first action set is updated, as shown in FIG. 7B, a motion process of the first obstacle accordingly changes. The trigger set is similar, and no examples are provided herein.

In a case, the first action set and the first trigger set may be an action set and a trigger set that correspond to any moment or any phase of the first obstacle. In this case, this solution can support editing a state and a behavior of the obstacle when the first obstacle moves at any moment or any phase, thereby improving flexibility of scenario generation.

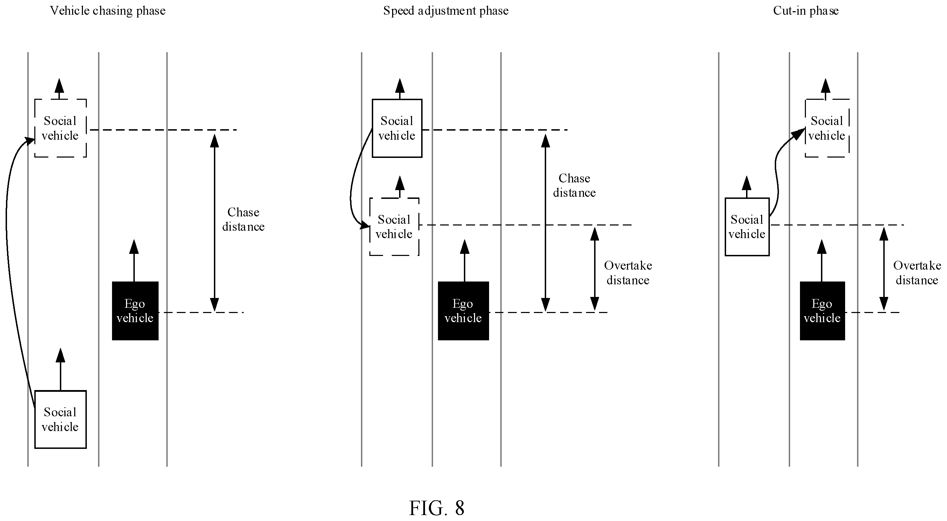

In another possible case, the first obstacle has interaction with the ego vehicle, and the interaction between the first obstacle and the ego vehicle may be decomposed into at least one interaction phase. An action of the first obstacle in each interaction phase may be described by using an action set, and a triggering manner of the interaction phase may be described by using a trigger set. The first action set and the first trigger set may be an action set and a trigger set in an interaction phase or several interaction nodes. Division of the interaction phases may be related to an interaction type. The interaction type may include one or more of the following interaction types: cut-in (cut-in), cross (cross), merge to the right (merge), lane-change (lane-change), and the like. FIG. 8 is a diagram of an interaction phase of a cut-in scenario according to an embodiment of this application. The cut-in scenario may include a vehicle chasing phase, a speed adjustment phase, and a cut-in execution phase. In the vehicle chasing phase, a social vehicle (considered as the first obstacle) may be designed to accelerate, so that a relative distance between the social vehicle and the ego vehicle reaches a chase distance (chase distance), and a next phase is triggered. In the speed adjustment phase, the social vehicle may be designed to adjust a speed (for example, accelerate or decelerate) of the social vehicle, so that a relative distance between the social vehicle and the ego vehicle reaches an overtake (overtake) distance, and a next phase is triggered. In the cut-in phase, the social vehicle may perform lane-change, to insert the social vehicle in front of the ego vehicle for traveling. It is not difficult to learn that each phase may be represented by a corresponding action set (for example, a speed, an acceleration, or a motion model) and a trigger set (for example, a relative distance or a relative speed). In other words, the first action set and the first trigger set may be the action set and the trigger set corresponding to any one or more of the foregoing phases.

In this case, the scenario generation apparatus may identify an interaction type between the first obstacle and the ego vehicle based on the initial motion information of the first obstacle and the initial motion information of the ego vehicle, and determine at least one interaction phase based on the interaction type corresponding to the first obstacle. Further, the scenario generation apparatus adjusts parameters in the action set and the trigger set in a first interaction phase, to obtain the first motion information of the first obstacle. The first interaction phase may be a part or all of the at least one interaction phase. In addition, when identifying the interaction type, the scenario generation apparatus may identify the interaction type between the first obstacle and the ego vehicle based on the scenario data of the first driving scenario.

In a possible implementation, the interaction type may be identified by using a rule-based method or a learning-based method. For example, Table 5 lists interaction types and features of the interaction types. The scenario generation apparatus may use motion information between the first obstacle and the ego vehicle, when the motion information between the first obstacle and the ego vehicle indicates that a motion relationship between the first obstacle and the ego vehicle meets a feature, the interaction type is an interaction type corresponding to the feature. For example, if it is determined, based on initial motion information of an obstacle and initial motion information of the ego vehicle, that the obstacle cuts in from a lane parallel to the ego vehicle to the front of the ego vehicle, it indicates that an interaction type between the obstacle and the ego vehicle is a cut-in type.

Table 5

| Interaction type | Feature | Interaction phase included |
|---|---|---|
| cut-in | The obstacle cuts in from the lane parallel to the ego vehicle to the front of the ego vehicle (following in the same lane as the ego vehicle) | Vehicle chasing, speed adjustment, and cut-in |
| merge | Exit from a ramp and merge into the front of the ego vehicle (following in the same lane as the ego vehicle) | Speed adjustment and merge |
| cross | Cross in front of the lane of the ego vehicle | Before passing, while passing, after passing |
| lane-change | Lane-change of the ego vehicle | Lane-change |
| ... | ... | ... |

Further, each interaction type may include one or more interaction phases. For example, merge may include two phases: speed adjustment and merge. For another example, lane-change may include one phase. It should be noted that Table 5 shows examples of interaction types and features of the interaction types for ease of understanding of identification of the interaction types. In a specific implementation process, identification of the interaction types may be further implemented based on another rule. In addition, the quantity and names of interaction phases corresponding to the interaction type may alternatively have other designs, for example, may include more or fewer names. An interaction type, a feature of the interaction type, an included interaction phase, and the like are not strictly limited in this application.

In a possible implementation, the foregoing adjustment may be obtained based on an operation input by the user. For example, the user manually inputs a value or a value of the updated behavior parameter. Correspondingly, the scenario generation apparatus receives the value or the threshold of the behavior parameter input by the user.

In another possible implementation, the foregoing adjustment may be obtained through an output of an algorithm or an AI model. For example, the scenario generation apparatus may receive values of a plurality of groups of behavior parameters (for example, an action set and a trigger set) output by an algorithm or an AI model. In this case, the first motion information of the first obstacle may be obtained based on the value of each group of behavior parameters. Values of the plurality of groups of behavior parameters output by the model are different from values of original behavior parameters, so that a motion process of the first obstacle changes. For example, in an original driving scenario (that is, the first driving scenario), the first obstacle turns left at a speed of 30 yards, and the AI model may adjust a speed of turning left to a speed of 25, 35, 40, 45, and 50 yards, to obtain at least four pieces of updated motion information. In this way, in the obtained at least four new scenarios, the first obstacle has more possible turning radii when turning left. In conclusion, the behavior parameter of the first obstacle can be generalized and modified by using an algorithm or AI, so that motion information of a plurality of obstacles can be quickly generalized from one driving scenario, and a plurality of derived scenarios can be quickly obtained subsequently. For example, with reference to FIG. 2, the generalization process may be implemented by using the scenario generalization module in the scenario generation apparatus 201.

Implementation 2: Adjust an initial movement trajectory of the first obstacle to obtain a first movement trajectory, where the first motion information includes the first movement trajectory.

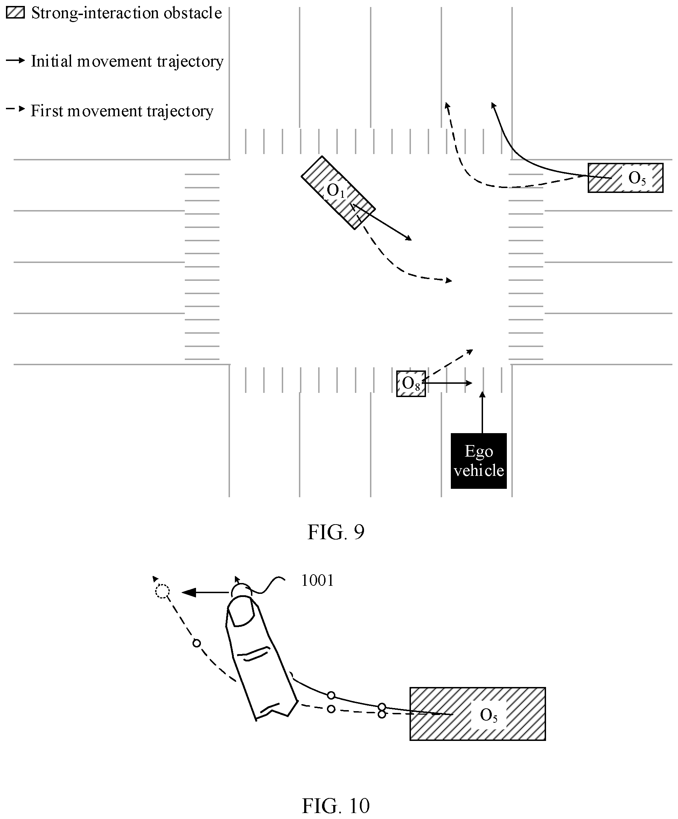

FIG. 9 is a diagram of a trajectory change according to an embodiment of this application. A solid line with an arrow is an initial movement trajectory of an obstacle, and a dashed line with an arrow is a second movement trajectory (that is, an updated movement trajectory). Using the obstacle $o_5$ as an example, the updated movement trajectory of the obstacle $o_5$ has a larger turning radius.

In some scenarios, the movement trajectory includes a plurality of trajectory points, and a position of at least one of the plurality of trajectory points may be updated, to form a new trajectory.

In a possible implementation, the update of the trajectory point may be indicated by an operation input by the user. For example, a scenario construction apparatus may receive an update operation that is input by the user and that is for a part or all of the plurality of trajectory points, and obtain the first movement trajectory based on the update operation. FIG. 10 is a diagram of a scenario of updating motion information of an obstacle according to an embodiment of this application. An arrow with a solid line is an initial movement trajectory of the obstacle $o_5$, and the initial movement trajectory may include a plurality of trajectory points, for example, a trajectory point 1001. The scenario generation apparatus may output an operation interface, and the operation interface may include an initial movement trajectory of the obstacle $o_6$ and a trajectory point on the trajectory. The user may perform an operation on the operation interface, for example, one or more of an information input operation, a tap operation, a drag operation, and a touch and hold operation. The information input operation is, for example, inputting a horizontal coordinate, a vertical coordinate, or a distance from a start point of the trajectory point 1001. The drag operation is, for example, dragging the trajectory point 1001 to another position. Correspondingly, the scenario generation apparatus receives an operation instruction of the user, where the operation instruction includes a target position to which the trajectory point 1001 is dragged, so that an updated trajectory of the obstacle $o_5$ may be obtained based on the target position to which the trajectory point 1001 is dragged. Certainly, the scenario generation apparatus may record position adjustment performed by the user on one or more trajectory points, and generate an updated trajectory of the obstacle $o_5$ when the user confirms obtaining a new trajectory (for example, when the user indicates saving or the user submits modification).

In another possible implementation, the update of the trajectory point may be indicated through an output of an algorithm or an AI model. For example, the scenario generation apparatus may calculate a key trajectory point in trajectory points of the initial trajectory of the first obstacle, and generate one or more derived interaction points (this process may also be referred to as a generalization process) based on the key trajectory point, to correspondingly obtain one or more movement trajectories of the first obstacle based on the one or more derived interaction points. The key trajectory point is, for example, an interaction point between movement trajectories of the first obstacle and the ego vehicle, or a steering point or a deceleration point of the first obstacle. Determining of the key point is not strictly limited herein. For example, the key trajectory point is a trajectory interaction point. The scenario construction apparatus may determine a trajectory interaction point between an initial movement trajectory of the first obstacle and an initial movement trajectory of the ego vehicle; obtain a derived trajectory point based on the trajectory interaction point, where the derived trajectory point is a trajectory point that is located on the initial movement trajectory of the ego vehicle and that is different from the trajectory interaction point; and obtain the first movement trajectory based on the derived trajectory point. For example, after the derived trajectory point is obtained, the trajectory interaction point of the first obstacle and a part or all of trajectory points other than the trajectory interaction point are smoothly connected, to obtain the first movement trajectory.

Further, before the movement trajectory is generated based on the derived trajectory point, the derived trajectory point may further undergo condition filtering. In other words, only a derived trajectory point that meets a preset condition is used to generate the movement trajectory of the first obstacle. Otherwise, the derived trajectory point may be discarded or updated. For example, the scenario generation apparatus may determine whether the derived trajectory point exceeds a road boundary, and whether the movement trajectory obtained based on the derived trajectory point collides with another obstacle (or the ego vehicle). In a possible implementation, when the derived trajectory point does not exceed a road boundary and the movement trajectory obtained based on the derived trajectory point does not collide with another obstacle (or the ego vehicle), the first movement trajectory of the first obstacle is obtained based on the derived trajectory point.

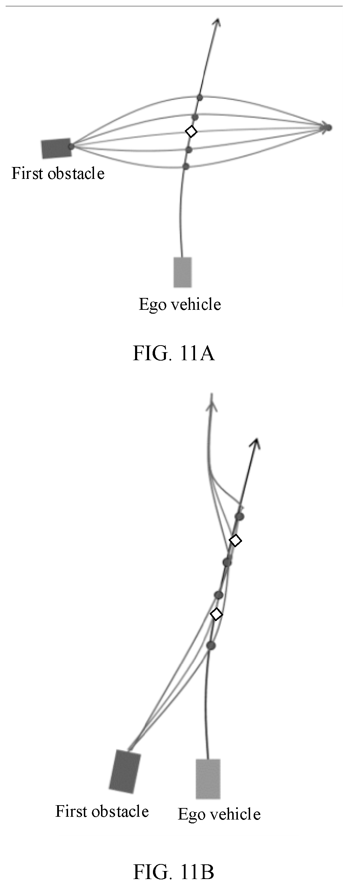

In some solutions, a specific distribution rule is met between derived interaction points derived from a same key trajectory point, or between a derived interaction point and an initial key trajectory point. For example, the key trajectory point is a trajectory interaction point between the first obstacle and the ego vehicle. A distribution rule may be as follows: On a movement trajectory along the ego vehicle, distances between any two interaction points are equal, and the interaction points herein include a derived interaction point and a basic interaction point. FIG. 11A and FIG. 11B each are a diagram of another scenario of updating motion information of an obstacle according to an embodiment of this application. Key trajectory points are shown by hollow squares in FIG. 11A and FIG. 11B, and derived trajectory points obtained based on the key trajectory points are shown by solid circles in FIG. 11A and FIG. 11B. It can be learned that a specific spacing exists between the derived trajectory point and the key trajectory point, and between the derived trajectory points.

Optionally, there may be a plurality of first obstacles. For example, trajectory update or behavior parameter update may be performed on a plurality of obstacles. For another example, the scenario generation apparatus may automatically derive a movement trajectory of each of the plurality of obstacles, or update a behavior parameter of each of the plurality of obstacles.

Step S303: Obtain second motion information of the second obstacle based on initial motion information of the second obstacle and the first motion information of the first obstacle.

Specifically, after the motion information of the first obstacle is updated, for the second obstacle, the motion information of the second obstacle may be updated based on the updated motion information (that is, the second motion information) of the first obstacle. When the motion information of the second obstacle is updated, the motion information of the second obstacle may be updated based on the initial motion information, and in combination with the first motion information of the first obstacle, so that a movement trajectory of the second obstacle may be as close as possible to an original trajectory of the second obstacle without colliding with the second obstacle, thereby improving authenticity.

In a possible implementation, the trajectory update of the second obstacle may be implemented by using an AI model. For example, the scenario generation apparatus inputs the initial motion information of the second obstacle and the first motion information of the first obstacle into the AI model, to obtain the second motion information of the second obstacle. Specifically, the AI model is obtained by training motion information of a plurality of obstacles in a driving scenario, so that joint optimization of the plurality of obstacles can be implemented. Further, the motion information of the obstacle output by the AI model may meet one or more of the following constraints: a kinematics constraint, a collision constraint, a travel specification constraint, or the like (which is described below). Further, the AI model may further update the motion information of the second obstacle at a minimum cost. For a description of the cost, refer to the following description.

In a possible implementation, for the trajectory update of the second obstacle, optimal motion information may be obtained by solving an updated trajectory cost.

Specifically, the scenario generation apparatus may determine the second motion information of the second obstacle based on the initial motion information of the second obstacle, a cost of the second motion information of the second obstacle, and the first motion information of the first obstacle. When the cost is calculated, the cost of the second motion information can be represented in an algebraic form. Therefore, the scenario generation apparatus may obtain a group of algebraic solutions by using a numerical solution method, to obtain the movement trajectory of the second obstacle.

The cost of the second motion information includes at least one of an authenticity cost, a smoothness cost, an obstacle avoidance cost, a scenario design cost, and the like. Specifically, the second motion information includes a second movement trajectory of the second obstacle, and the second movement trajectory includes a plurality of trajectory points. The authenticity cost indicates a difference between the second motion information of the second obstacle and the initial motion information of the second obstacle, and the authenticity cost is related to coordinates, orientations, curvatures, and speeds of the plurality of trajectory points. The smoothness cost indicates smoothness of position changes of the plurality of trajectory point, and the smoothness cost is related to a curvature and an acceleration of the second movement trajectory. The obstacle avoidance cost indicates an obstacle avoidance amplitude of the second obstacle. The scenario design cost is a predefined scenario design cost. For example, the scenario design cost is a cost incurred for flexibly adjusting a vehicle to make decisions in different test scenarios. For example, a corresponding scenario design cost may be predefined for a hard case scenario, a special weather scenario (for example, a rainy day scenario, a snowstorm scenario, or a heavy fog scenario), or a special terrain scenario (for example, a winding mountain road scenario, a desert area scenario, a high-temperature scenario, or a frozen soil scenario).

Optionally, when the second obstacle includes a plurality of obstacles, the cost of the second motion information of the second obstacle is a sum of costs of the second motion information of the plurality of obstacles.

For example, when the second obstacle includes one obstacle (the following uses an obstacle i as an example), a cost $J_i$ of the second motion information of the second obstacle may be calculated by using the following formula:

$$J_i = W_X \, (X_i - X^{ref})^2 + W_k k_i{}^2 + W_u u_i{}^2 + W_a a_i{}^2 + W_s slack_i{}^2 + W_f f_{hard}{}^2$$

$X_i$ represents the second motion information of the second obstacle i. The second motion information of the second obstacle i may include a plurality of trajectory points. For example, if a quantity of trajectory points is represented as m, the second motion information may be represented by positions, orientations, curvatures, and speeds of the m trajectory points. That is, the second motion information of the second obstacle

$X_i = [x_i^1, y_i^1, phi_i^1, k_i^1, v_i^1, ..., x_i^m, y_i^m, phi_i^m, k_i^m, v_i^m]$ , where m is the quantity of trajectory points, and [x, y, phi, k, v] are respectively a horizontal coordinate, a vertical coordinate, an orientation angle, a curvature, and a speed of the trajectory point.

$W_X$, $W_k$, $W_u$, $W_a$, $W_s$, $W_f$ represent coefficients. $W_X(X_i - X^{ref})^2$ is an authenticity cost, and $X^{ref}$ is·initial motion information of the second obstacle i, and may also include positions, orientations, curvatures, speeds, and the like of the plurality of trajectory points. Details are not described herein again. $W_k k_i^2 + W_u u_i^2 + W_a a_i^2$ is a smoothness cost, $k_i$ represents a curvature of the second obstacle i, $a_i$ is an acceleration of the second obstacle i, $u_i$ is a curvature derivative of the second obstacle i (or a change rate of the curvature), $W_s slack_i^2$ is an obstacle avoidance cost, and $W_f f_{hard}^2$ is a hard case cost, which is a design cost in a hard case scenario, that is, $W_f f_{hard}^2$ belongs to a scenario design cost.

For another example, when the second obstacle includes n (n is an integer greater than 1) obstacles, the cost of the second motion information of the second obstacle may meet the following formula:

$$min \sum_{i=0}^{n} J_i(X_i, a_i, u_i)$$

$J_i$ represents a cost of second motion information of an ith obstacle in the n (n is an integer and n>0) obstacles included in the second obstacle, i=1, 2, 3, ..., and i≤n.

In some possible cases, the second motion information further meets one or more of the following constraint conditions: a kinematics constraint, a collision constraint, or a travel specification constraint. The kinematics constraint indicates a value range of the following behavior parameters in the second motion information: a curvature, a speed, an acceleration, and a change rate of the curvature. The collision constraint is used to constrain the second obstacle from colliding with another object. The another object herein may include the ego vehicle, one or more obstacles (for example, the first obstacle) in the first driving scenario, and the like. The travel specification constraint is used to constrain the behavior of the first obstacle to meet a predefined travel specification.

The following describes the foregoing constraints by using examples.

(1) The kinematics constraint is used to constrain a range of a curvature, a speed, an acceleration, a curvature derivative, and the like, to ensure that a traveling trajectory is more reasonable and meets the kinematics constraint. For example, a curvature k, a speed v, an acceleration a, a curvature derivative u, and the like of the second obstacle are respectively in the following ranges:

*k ≥ kappaLowBound, k ≤ kappaUpperBound*
*v ≥ vLowBound, v ≤ vUpperBound*
*u ≥ uLowBound, u ≤ uUpperBound*
*a ≥ aLowBound, a ≤ aUpperBound*

*kappaLowBound* and *kappaUpperBound* represent value thresholds of the curvature, and *vLowBound* and *vUpperBound* represent value thresholds of the speed. Other parameters are similar and are not described here.

(2) The motion information of the second obstacle needs to conform to a kinematics model. For example, a displacement x, a displacement y, time t, a curvature k, a speed v, an acceleration a, change rates u and $\theta$ of the curvature, and the like of the second obstacle meet the following formulas:

$$\dot{x}(t) = v(t)cos(\theta(t))$$

$$\dot{y}(t) = v(t)sin(\theta(t))$$

$$\dot{\theta}(t) = v(t)\kappa(t)$$

$$\dot{\kappa}(t) = u(t)$$

$$\dot{v}(t) = a(t)$$

(3) The collision constraint ensures that the second obstacle does not collide with another obstacle.

The following separately describes constraint conditions used to implement no collision between second obstacles, between the second obstacle and the first obstacle, and between the second obstacle and the ego vehicle. For example, the second obstacle includes two obstacles. Positions of the two obstacles are respectively represented by (*x1, y1*) and (*x2, y2*), a position of the ego vehicle is represented by (*egox, egoy*), and a position of the first obstacle is represented by (*keyObjx, keyObjy*).

For example, no collision between second obstacles may be represented by using the following formula:

$$(x1 - x2) * (x1 - x2) + (y1 - y2) * (y1 - y2) \geq slack$$

$$slack \geq slackLower, slack \leq slackUpper$$

slackLower represents a lower threshold during collision identification, and *slackUpper* represents an upper threshold during collision identification. The threshold may be predefined or pre-designed.

For example, no collision between the second obstacle and the ego vehicle may be represented by using the following formula:

$$(x1 - egox) * (x1 - egox) + (y1 - egoy) * (y1 - egoy) \geq slackEgo$$

$$slackEgo \geq slackEgoLower, slackEgo \leq slackEgoUpper$$

For example, no collision between the second obstacle and the first obstacle may be represented by using the

following formula:

$$(x1 - keyObjx) * (x1 - keyObjx) + (y1 - keyObjy) * (y1 - keyObjy) \geq slackKeyObj$$

$$slackKeyObj \geq slackKeyObjLower, slackKeyObj \leq slackKeyObjUpper$$

(4) The travel specification constraint is used to constrain the traveling trajectory of the second obstacle to meet a road constraint, for example, keeping off a road edge with a solid line. For example, a travel specification constraint of the second obstacle ($x1$, $y1$) may be represented by using the following formula:

$$-slackNormal \leq (x1 - xNormal) * \sin(thetaNormal) - (y1 - yNormal) *$$
$$\cos(thetaNormal) \leq slackNoraml.$$

*slackNormal, xNormal, yNormal,* and the like represent parameters related to the road specification.

In a possible implementation, the scenario generation apparatus may solve the foregoing design cost or one or more of the foregoing constraints by using the solver, to obtain the second motion information of the second obstacle.

Step S304: Generate a target driving scenario based on the first motion information of the first obstacle and the second motion information of the second obstacle.

Optionally, the target driving scenario may be used to test an intelligent driving algorithm, or the target driving scenario may be used as model training data, for example, used to train an obstacle identification model, or used to train an autonomous driving decision-making model.

In a possible case, the target driving scenario may be played in the scenario generation apparatus. When the target driving scenario is played, the first obstacle moves in the target driving scenario based on a motion process indicated by the first motion information. The motion process herein includes a movement trajectory and a behavior parameter in the motion process. Correspondingly, the second obstacle moves based on a motion process indicated by the second motion information. With reference to FIG. 2, the scenario playing function may be implemented by using the scenario playing module in the scenario generation apparatus 201.

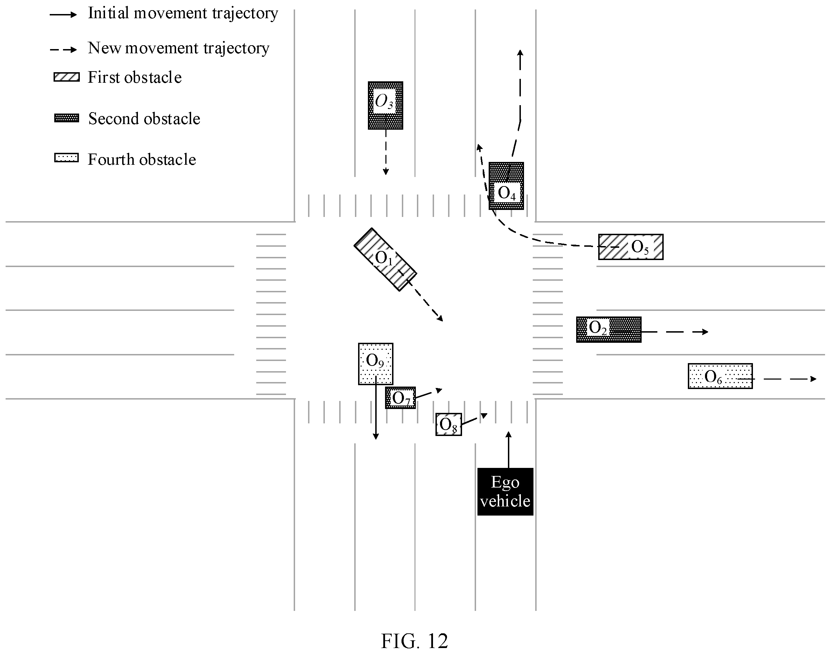

For example, FIG. 12 is a diagram of the target driving scenario according to an embodiment of this application. A solid line with an arrow is an initial movement trajectory, and a dashed line with an arrow is a movement trajectory obtained after adjustment.

Optionally, the scenario data of the first driving scenario further includes initial motion information of a fourth obstacle. The scenario generation apparatus may generate the target driving scenario based on the first motion information of the first obstacle, the second motion information of the second obstacle, and the initial motion information of the fourth obstacle.

Further, optionally, the fourth obstacle does not interact with the ego vehicle and the first obstacle. For example, the fourth obstacle may belong to the third-type obstacle (that is, a background obstacle).

The foregoing describes the method in embodiments of this application, and the following provides an apparatus in embodiments of this application.

It may be understood that, to implement functions in the foregoing method embodiments, a plurality of apparatuses provided in embodiments of this application, for example, a scenario generation apparatus and a compute device, include a corresponding hardware structure, software unit, or a combination of a hardware structure and a software structure for performing each function. A person skilled in the art should be easily aware that, in combination with a plurality of functions described in embodiments disclosed in this specification, the apparatus and modules in the apparatus may be implemented by hardware or a combination of hardware and computer software. Whether a function is performed by hardware or hardware driven by computer software depends on particular applications and design constraints of the technical solutions. A person skilled in the art may implement the foregoing method embodiments by using different apparatus implementations in different use scenarios. It should not be considered that different implementations of the apparatus go beyond the scope of embodiments of this application.

The following lists several possible apparatuses.

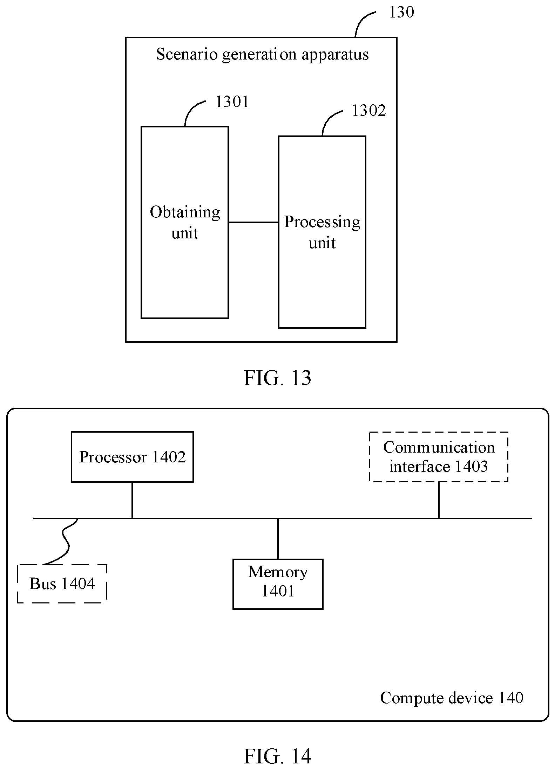

FIG. 13 is a diagram of a structure of a scenario generation apparatus according to an embodiment of this application. The scenario generation apparatus 130 may include an obtaining unit 1301 and a processing unit 1302. The scenario generation apparatus 130 is configured to implement the foregoing scenario generation method, for example, the scenario generation method in the embodiment shown in FIG. 3.

In a possible implementation, the obtaining unit 1301 is configured to obtain scenario data of a first driving scenario, where the scenario data indicates initial motion information of an obstacle in the first driving scenario, and the obstacle in the first driving scenario includes a first obstacle and a second obstacle.

The processing unit 1302 is configured to:

adjust initial motion information of the first obstacle, to generate first motion information of the first obstacle;

obtain second motion information of the second obstacle based on initial motion information of the second obstacle and the first motion information of the first obstacle; and

generate a target driving scenario based on the first motion information of the first obstacle and the second motion information of the second obstacle.

In a possible implementation, the scenario data further includes initial motion information of an ego vehicle.

In a possible implementation, the processing unit 1302 is further configured to obtain the second motion information of the second obstacle based on the initial motion information of the ego vehicle, the initial motion information of the second obstacle, and the first motion information of the first obstacle.

In a possible implementation, a degree of interaction between the first obstacle and the ego vehicle is higher than or not lower than a degree of interaction between the second obstacle and the ego vehicle.

In a possible implementation, the processing unit 1302 is further configured to adjust the initial motion information of the first obstacle based on an input of a user, to generate the first motion information of the first obstacle;

In a possible implementation, the processing unit 1302 is further configured to adjust the initial motion information of the first obstacle by using an artificial intelligence model, to generate the first motion information of the first obstacle.

In a possible implementation, the second obstacle is an obstacle that has interaction with the first obstacle.

In a possible implementation, the second obstacle is an obstacle that has interaction with the ego vehicle other than the first obstacle.

In a possible implementation, the processing unit 1302 is further configured to determine an obstacle type based on a degree of interaction between an obstacle and the ego vehicle and a degree of interaction between obstacles in the first driving scenario, where the obstacle type includes a first-type obstacle and a second-type obstacle.

A degree of interaction between the first-type obstacle and the ego vehicle is higher than a degree of interaction between the second-type obstacle and the ego vehicle.

Optionally, the first obstacle belongs to the first-type obstacle, and the second obstacle includes at least one obstacle in the second-type obstacle and/or includes at least one obstacle other than the first obstacle in the first-type obstacle. In some solutions, the first-type obstacle may be referred to as a strong-interaction obstacle, and the second-type obstacle may be referred to as a weak-interaction obstacle.

In a possible implementation, the obstacle in the first driving scenario includes a first-type obstacle and a second-type obstacle. For explanations of the first-type obstacle and the second-type obstacle, refer to the foregoing descriptions.

In a possible implementation, the initial motion information of the first obstacle includes a plurality of behavior parameters of the first obstacle, and the plurality of behavior parameters are used to describe a behavior of the first obstacle. The processing unit 1302 is further configured to adjust values or thresholds of the plurality of behavior parameters of the first obstacle, to generate the first motion information of the first obstacle.

In a possible implementation, the initial motion information of the first obstacle includes a first action set and a first trigger set of the first obstacle. The processing unit 1302 is further configured to adjust the first action set and/or the first trigger set of the first obstacle, to generate the first motion information of the first obstacle.

In a possible implementation, the initial motion information of the first obstacle includes an initial movement trajectory of the first obstacle.

The processing unit 1302 is further configured to adjust the initial movement trajectory of the first obstacle to obtain a first movement trajectory, where the first motion information includes the first movement trajectory.

In a possible implementation, the initial movement trajectory of the first obstacle includes a plurality of trajectory points. The obtaining unit 1301 is further configured to receive an update operation that is input by the user and that is for a part or all of the plurality of trajectory points. The processing unit 1302 is further configured to obtain the first movement trajectory based on the update operation.

In a possible implementation, the scenario data further includes an initial movement trajectory of the ego vehicle. The processing unit 1302 is further configured to:

determine a trajectory interaction point between the initial movement trajectory of the first obstacle and the initial movement trajectory of the ego vehicle;

obtain a derived trajectory point through derivation based on the trajectory interaction point, where a position of the derived trajectory point is located on the initial movement trajectory of the ego vehicle and is different from a position of the trajectory interaction point; and

obtain the first movement trajectory based on the derived trajectory point.

In a possible implementation, the processing unit 1302 is further configured to:

determine the second motion information of the second obstacle based on the initial motion information of the second obstacle, a cost of the second motion information of the second obstacle, and the first motion information of the first obstacle.

Optionally, the cost of the second motion information includes one or more of an authenticity cost, a smoothness cost, an obstacle avoidance cost, a scenario design cost, and the like.

In a possible implementation, the cost $J_i$ of the second motion information of the second obstacle is represented by using the following formula:

$$J_i = W_X \, (X_i - X^{ref})^2 + W_k k_i{}^2 + W_u u_i{}^2 + W_a a_i{}^2 + W_s slack_i{}^2 + W_f f_{hard}{}^2$$

For descriptions of the parameters, refer to the foregoing descriptions.

In a possible implementation, the second motion information meets one or more of the following constraint conditions: a kinematics constraint, a collision constraint, or a travel specification constraint.

In a possible implementation, the scenario data of the first driving scenario further includes initial motion information of a fourth obstacle, and the fourth obstacle does not interact with the ego vehicle and the first obstacle.

The processing unit 1302 is further configured to generate the target driving scenario based on the first motion information of the first obstacle, the second motion information of the second obstacle, and the initial motion information of the fourth obstacle.

FIG. 14 is a diagram of a structure of a compute device according to an embodiment of this application. The compute device 140 is a device having a computing capability. The device herein may be a physical device, for example, a controller, a processor, a server (for example, a rack server), or a host, or may be a virtual device, for example, a virtual machine or a container.

As shown in FIG. 14, the compute device 140 includes a processor 1402 and a memory 1401, and optionally includes a bus 1404 and a communication interface 1403. The processor 1402 communicates with the memory 1401 and the like through the bus 1404. It should be understood that a quantity of processors and a quantity of memories in the compute device 140 are not limited in this application.

The memory 1401 is configured to provide storage space. The storage space may optionally store application data, user data, an operating system, a computer program, and the like. The memory 1401 may include a volatile memory (volatile memory), for example, a random access memory (random access memory, RAM). The memory 1401 may further include a non-volatile memory (non-volatile memory), for example, a read-only memory (read-only memory, ROM), a flash memory, a hard disk drive (hard disk drive, HDD), or a solid state drive (solid state drive, SSD).

The processor 1402 is a module for performing an operation, and may include any one or more of a controller (for example, a storage controller), a central processing unit (central processing unit, CPU), a micro graphics processing unit (graphics processing unit, GPU), a microprocessor (micro processor, MP), a digital signal processor (digital signal processor, DSP), a coprocessor (assisting the central processing unit in completing corresponding processing and application), an application-specific integrated circuit (Application Specific Integrated Circuit, ASIC), a microcontroller unit (Microcontroller Unit, MCU), a virtual machine, a container, and the like.

The communication interface 1403 may be configured to provide an information input or output for the at least one processor, and/or the communication interface 1403 may be configured to receive data sent from the outside and/or send data to the outside. The communication interface 1403 may be a wired link interface including, for example, an ethernet cable, or may be a wireless link (Wi-Fi, Bluetooth, universal wireless transmission, or another wireless communication technology) interface. Optionally, the communication interface 1403 may further include a transmitter (for example, a radio frequency transmitter or an antenna), a receiver, or the like coupled to the interface.

The bus 1404 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one line is for representing the bus in FIG. 14, but this does not mean that there is only one bus or only one type of bus. The bus 1404 may include a path for transmitting information between components (for example, the memory 1401, the processor 1402, and the communication interface 1403) of the compute device 140.

In this embodiment of this application, the memory 1401 stores executable instructions, and the processor 1402 executes the executable instructions to implement the foregoing scenario generation method, for example, the scenario generation method in the embodiment shown in FIG. 3. In other words, the memory 1401 stores instructions used to perform the scenario generation method.

An embodiment of this application further provides a compute device cluster. The compute device cluster includes at least one compute device 140. Each compute device 140 includes a processor 1402 and a memory 1401.

The processor 1402 of the at least one compute device 140 is configured to execute the instructions stored in the memory 1401 of the at least one compute device 140, so that the compute device cluster implements the foregoing scenario generation method, for example, the scenario generation method in the embodiment shown in FIG. 3. Optionally, the memory stores the instructions used to perform the scenario generation method.

**EP 4 787 304 A1**

An embodiment of this application provides a computer-readable storage medium. The computer-readable storage medium stores instructions. When the instructions are run on at least one processor, the foregoing scenario generation method, for example, the scenario generation method in the embodiment shown in FIG. 3, is implemented.

The computer-readable storage medium may be any usable medium that can be stored by a compute device, or a data storage device like a data center including one or more usable media. The computer-readable storage medium may be a magnetic medium (for example, a floppy disk, a hard disk, or a magnetic tape), an optical medium (for example, a DVD), a semiconductor medium (for example, a solid state drive), or the like.

This application provides a computer program product, where the computer program product includes computer instructions, and when the instructions are run on at least one processor, the foregoing scenario generation method, for example, the scenario generation method in the embodiment shown in FIG. 3, is implemented.

Optionally, the computer program product may be a software installation package or an image package. When the foregoing method needs to be used, the computer program product may be downloaded, and the computer program product is executed on the compute device.

In embodiments of this application, the term like "example" or "for example" is used to represent giving an example, an illustration, or a description. Any embodiment or design scheme described as an "example" or "for example" in this application should not be explained as being more preferred or having more advantages than another embodiment or design scheme. To be precise, use of the word such as "example" or "for example" is intended to present a relative concept in a specific manner.

In embodiments of this application, "at least one" means one or more, and "a plurality of" means two or more. "At least one of the following items (pieces)" or a similar expression thereof refers to any combination of these items, including any combination of singular items (pieces) or plural items (pieces). For example, at least one item (piece) of a, b, and c may indicate: a, b, c, (a and b), (a and c), (b and c), or (a, b, and c), where a, b, and c may be singular or plural. The term "and/or" describes an association between associated objects, and represents that three relationships may exist. For example, A and/or B may represent the following three cases: Only A exists, both A and B exist, and only B exists, where A and B may be singular or plural. The character "/" generally indicates an "or" relationship between the associated objects.

In addition, unless otherwise stated, ordinal numbers such as "first" and "second" in embodiments of this application are for differentiation between a plurality of objects, but are not intended to limit an order, a time sequence, priorities, or importance of the plurality of objects. For example, a first storage device and a second storage device are merely for ease of description, but do not indicate differences in apparatus structures, deployment sequences, importance degrees, and the like of the first storage device and the second storage device.

A person of ordinary skill in the art may understand that all or some of the steps of embodiments may be implemented by hardware or a program instructing related hardware. The program may be stored in a computer-readable storage medium. The storage medium may include: a read-only memory, a magnetic disk, or an optical disc.

Finally, it should be noted that the foregoing embodiments are merely intended for describing the technical solutions of the present invention other than limiting the present invention. Although the present invention is described in detail with reference to the foregoing embodiments, a person of ordinary skill in the art should understand that modifications may still be made to the technical solutions described in the foregoing embodiments or equivalent replacements may still be made to some technical features thereof, without departing from the protection scope of the technical solutions of embodiments of the present invention.

**Claims**

1. A scenario generation method, wherein the method comprises:

   obtaining scenario data of a first driving scenario, wherein the scenario data of the first driving scenario indicates initial motion information of an ego vehicle and an obstacle in the first driving scenario, and the obstacle in the first driving scenario comprises a first obstacle and a second obstacle;
   adjusting initial motion information of the first obstacle, to generate first motion information of the first obstacle;
   obtaining second motion information of the second obstacle based on initial motion information of the second obstacle and the first motion information of the first obstacle; and
   generating a target driving scenario based on the first motion information of the first obstacle and the second motion information of the second obstacle.

2. The method according to claim 1, wherein obtaining the second motion information of the second obstacle based on the initial motion information of the second obstacle and the first motion information of the first obstacle comprises:
   obtaining the second motion information of the second obstacle based on the initial motion information of the ego vehicle, the initial motion information of the second obstacle, and the first motion information of the first obstacle.

3. The method according to claim 1 or 2, wherein a degree of interaction between the first obstacle and the ego vehicle is not lower than a degree of interaction between the second obstacle and the ego vehicle.

4. The method according to any one of claims 1 to 3, wherein the second obstacle is an obstacle that has interaction with the first obstacle and/or an obstacle that has interaction with the ego vehicle other than the first obstacle.

5. The method according to any one of claims 1 to 4, wherein adjusting the initial motion information of the first obstacle, to generate the first motion information of the first obstacle comprises:
adjusting the initial motion information of the first obstacle based on an input of a user or by using an artificial intelligence model, to generate the first motion information of the first obstacle.

6. The method according to any one of claims 1 to 5, wherein the obstacle in the first driving scenario comprises a first-type obstacle and a second-type obstacle, wherein

the first-type obstacle is an obstacle whose degree of interaction with the ego vehicle meets a first condition;
the second-type obstacle comprises an obstacle whose degree of interaction with the ego vehicle meets a second condition and/or an obstacle that has interaction with a third obstacle, the third obstacle is at least one obstacle in the first-type obstacle, and the first condition is different from the second condition; and
the first obstacle belongs to the first-type obstacle, and the second obstacle comprises at least one obstacle in the second-type obstacle and/or comprises at least one obstacle other than the first obstacle in the first-type obstacle.

7. The method according to claim 6, wherein the first condition comprises: a time interval between an obstacle passing through a trajectory interaction point and the ego vehicle passing through the trajectory interaction point is in a first duration range;

the second condition comprises: a time interval between an obstacle passing through a trajectory interaction point and the ego vehicle passing through the trajectory interaction point is in a second duration range, and a lower bound of the second duration range is greater than an upper bound of the first duration range; and
when an obstacle and the third obstacle meet the following conditions, interaction exists between the obstacle and the third obstacle:
a trajectory interaction point exists between the obstacle and the third obstacle, and a time interval between the obstacle passing through the trajectory interaction point and the third obstacle passing through the trajectory interaction point is in a third duration range.

8. The method according to claim 6, wherein the first condition comprises: a trajectory interaction point exists between a movement trajectory of an obstacle and a movement trajectory of the ego vehicle, a first time interval between the obstacle passing through the trajectory interaction point and the ego vehicle passing through the trajectory interaction point is first N time intervals in a time interval sequence, N is an integer greater than 0, and the first N time intervals in the time interval sequence are less than or equal to a time interval other than the first N time intervals in the time interval sequence; and

the second condition comprises: a trajectory interaction point exists between a movement trajectory of an obstacle and a movement trajectory of the ego vehicle, a first time interval between the obstacle passing through the trajectory interaction point and the ego vehicle passing through the trajectory interaction point is in first N+1 to K time intervals in the time interval sequence, K is an integer, and K>N, wherein
the time interval sequence comprises M time intervals sequentially arranged by duration, each of the M time intervals is an interval between a moment at which an obstacle interacting with the ego vehicle passes through a first trajectory interaction point of the ego vehicle and a moment at which the ego vehicle passes through the first trajectory interaction point, the obstacle interacting with the ego vehicle is an obstacle that has a trajectory interaction point with the ego vehicle in the first driving scenario, M is an integer, and M≥K.

9. The method according to any one of claims 1 to 8, wherein the initial motion information of the first obstacle comprises a plurality of behavior parameters of the first obstacle, the plurality of behavior parameters are used to describe a behavior of the first obstacle, and adjusting the initial motion information of the first obstacle, to generate the first motion information of the first obstacle comprises:
adjusting values or thresholds of the plurality of behavior parameters of the first obstacle, to generate the first motion information of the first obstacle.

10. The method according to any one of claims 1 to 8, wherein the initial motion information of the first obstacle comprises a first action set and a first trigger set of the first obstacle, the first action set is used to describe a first action of the first obstacle, the first action set comprises a value of a first behavior parameter of the first action, and the first trigger set is used to describe a condition for performing the first action; and

adjusting the initial motion information of the first obstacle, to generate the first motion information of the first obstacle comprises:
adjusting the first action set and/or the first trigger set of the first obstacle, to generate the first motion information of the first obstacle.

11. The method according to any one of claims 1 to 8, wherein the initial motion information of the first obstacle comprises an initial movement trajectory of the first obstacle; and

adjusting the initial motion information of the first obstacle, to generate the first motion information of the first obstacle comprises:
adjusting the initial movement trajectory of the first obstacle to obtain a first movement trajectory, wherein the first motion information comprises the first movement trajectory.

12. The method according to claim 11, wherein the initial movement trajectory of the first obstacle comprises a plurality of trajectory points, and adjusting the initial movement trajectory of the first obstacle to obtain the first movement trajectory comprises:

receiving an update operation that is input by the user and that is for a part or all of the plurality of trajectory points; and
obtaining the first movement trajectory based on the update operation.

13. The method according to claim 11, wherein adjusting the initial movement trajectory of the first obstacle to obtain the first movement trajectory comprises:

determining a trajectory interaction point between the initial movement trajectory of the first obstacle and an initial movement trajectory of the ego vehicle;
obtaining a derived trajectory point based on the trajectory interaction point, wherein the derived trajectory point is a trajectory point that is located on the initial movement trajectory of the ego vehicle and is different from the trajectory interaction point; and
obtaining the first movement trajectory based on the derived trajectory point.

14. The method according to any one of claims 1 to 13, wherein obtaining the second motion information of the second obstacle based on the initial motion information of the second obstacle and the first motion information of the first obstacle comprises:
determining the second motion information of the second obstacle based on the initial motion information of the second obstacle, a cost of the second motion information of the second obstacle, and the first motion information of the first obstacle.

15. The method according to claim 14, wherein the cost of the second motion information comprises at least one of an authenticity cost, a smoothness cost, an obstacle avoidance cost, and a scenario design cost, the second motion information comprises a second movement trajectory of the second obstacle, and the second movement trajectory comprises a plurality of trajectory points, wherein

the authenticity cost indicates a difference between the second motion information of the second obstacle and the initial motion information of the second obstacle, and the authenticity cost is related to coordinates, orientations, curvatures, and speeds of the plurality of trajectory points in the second movement trajectory;
the smoothness cost indicates smoothness of position changes of the plurality of trajectory points in the second movement trajectory, and the smoothness cost is related to a curvature and an acceleration of the second movement trajectory;
the obstacle avoidance cost indicates an obstacle avoidance amplitude of the second obstacle; and
the scenario design cost is a predefined scenario design cost.

16. The method according to any one of claims 1 to 15, wherein the second motion information meets one or more of the following constraint conditions: a kinematics constraint, a collision constraint, or a travel specification constraint, wherein

the kinematics constraint indicates a value range of one or more of the following behavior parameters in the second motion information: a speed, an acceleration, a curvature of a movement trajectory, and a change rate of the curvature of the movement trajectory;

the collision constraint is used to constrain the second obstacle from colliding with the ego vehicle and the obstacle in the first driving scenario; and

the travel specification constraint is used to constrain the behavior of the first obstacle to meet a predefined travel specification.

17. The method according to any one of claims 1 to 16, wherein the scenario data of the first driving scenario further comprises initial motion information of a fourth obstacle, and the fourth obstacle does not interact with the ego vehicle and the first obstacle; and

generating the target driving scenario based on the first motion information of the first obstacle and the second motion information of the second obstacle comprises:

generating the target driving scenario based on the first motion information of the first obstacle, the second motion information of the second obstacle, and the initial motion information of the fourth obstacle.

18. A scenario generation apparatus, wherein the apparatus comprises an obtaining unit and a processing unit, wherein

the obtaining unit is configured to obtain scenario data of a first driving scenario, wherein the scenario data of the first driving scenario indicates initial motion information of an ego vehicle and an obstacle in the first driving scenario, and the obstacle in the first driving scenario comprises a first obstacle and a second obstacle; and the processing unit is configured to:

adjust initial motion information of the first obstacle, to generate first motion information of the first obstacle; obtain second motion information of the second obstacle based on initial motion information of the second obstacle and the first motion information of the first obstacle; and

generate a target driving scenario based on the first motion information of the first obstacle and the second motion information of the second obstacle.

19. The scenario generation apparatus according to claim 18, wherein the processing unit is further configured to: obtain the second motion information of the second obstacle based on the initial motion information of the ego vehicle, the initial motion information of the second obstacle, and the first motion information of the first obstacle.

20. The scenario generation apparatus according to claim 18 or 19, wherein a degree of interaction between the first obstacle and the ego vehicle is not lower than a degree of interaction between the second obstacle and the ego vehicle.

21. The scenario generation apparatus according to any one of claims 18 to 20, wherein the second obstacle is an obstacle that has interaction with the first obstacle and/or an obstacle that has interaction with the ego vehicle other than the first obstacle.

22. The scenario generation apparatus according to any one of claims 18 to 21, wherein the processing unit is further configured to:

adjust the initial motion information of the first obstacle based on an input of a user or by using an artificial intelligence model, to generate the first motion information of the first obstacle.

23. The scenario generation apparatus according to any one of claims 18 to 22, wherein the obstacle in the first driving scenario comprises a first-type obstacle and a second-type obstacle, wherein

the first-type obstacle is an obstacle whose degree of interaction with the ego vehicle meets a first condition; the second-type obstacle comprises an obstacle whose degree of interaction with the ego vehicle meets a second condition and/or an obstacle that has interaction with a third obstacle, the third obstacle is at least one obstacle in the first-type obstacle, and the first condition is different from the second condition; and the first obstacle belongs to the first-type obstacle, and the second obstacle comprises an obstacle in the second-type obstacle and/or comprises an obstacle other than the first obstacle in the first-type obstacle.

24. The scenario generation apparatus according to any one of claims 18 to 23, wherein the initial motion information of the first obstacle comprises a plurality of behavior parameters of the first obstacle, and the plurality of behavior parameters are used to describe a behavior of the first obstacle; and the processing unit is further configured to: adjust values or thresholds of the plurality of behavior parameters of the first obstacle, to generate the first motion information of the first obstacle.

25. The scenario generation apparatus according to any one of claims 18 to 23, wherein the initial motion information of the first obstacle comprises a first action set and a first trigger set of the first obstacle, the first action set is used to describe a first action of the first obstacle, the first action set comprises a value of a first behavior parameter of the first action, and the first trigger set is used to describe a condition for performing the first action; and
the processing unit is further configured to:
adjust the first action set and/or the first trigger set of the first obstacle, to generate the first motion information of the first obstacle.

26. The scenario generation apparatus according to any one of claims 18 to 23, wherein the initial motion information of the first obstacle comprises an initial movement trajectory of the first obstacle; and
the processing unit is further configured to:
adjust the initial movement trajectory of the first obstacle to obtain a first movement trajectory, wherein the first motion information comprises the first movement trajectory.

27. The scenario generation apparatus according to claim 26, wherein the initial movement trajectory of the first obstacle comprises a plurality of trajectory points;

the obtaining unit is further configured to receive an update operation that is input by the user and that is for a part or all of the plurality of trajectory points; and
the processing unit is further configured to obtain the first movement trajectory based on the update operation.

28. The scenario generation apparatus according to claim 27, wherein the processing unit is further configured to:

determine a trajectory interaction point between the initial movement trajectory of the first obstacle and an initial movement trajectory of the ego vehicle;
obtain a derived trajectory point based on the trajectory interaction point, wherein the derived trajectory point is a trajectory point that is located on the initial movement trajectory of the ego vehicle and is different from the trajectory interaction point; and
obtain the first movement trajectory based on the derived trajectory point.

29. The scenario generation apparatus according to any one of claims 18 to 28, wherein the processing unit is further configured to:
determine the second motion information of the second obstacle based on the initial motion information of the second obstacle, a cost of the second motion information of the second obstacle, and the first motion information of the first obstacle.

30. The scenario generation apparatus according to claim 29, wherein the cost of the second motion information comprises at least one of an authenticity cost, a smoothness cost, an obstacle avoidance cost, and a scenario design cost, the second motion information comprises a second movement trajectory of the second obstacle, and the second movement trajectory comprises a plurality of trajectory points, wherein

the authenticity cost indicates a difference between the second motion information of the second obstacle and the initial motion information of the second obstacle, and the authenticity cost is related to coordinates, orientations, curvatures, and speeds of the plurality of trajectory points in the second movement trajectory;
the smoothness cost indicates smoothness of position changes of the plurality of trajectory points in the second movement trajectory, and the smoothness cost is related to a curvature and an acceleration of the second movement trajectory;
the obstacle avoidance cost indicates an obstacle avoidance amplitude of the second obstacle; and
the scenario design cost is a predefined scenario design cost.

31. The scenario generation apparatus according to any one of claims 18 to 30, wherein the second motion information meets one or more of the following constraint conditions: a kinematics constraint, a collision constraint, or a travel specification constraint, wherein

the kinematics constraint indicates a value range of one or more of the following behavior parameters in the second motion information: a curvature, a speed, an acceleration, and a curvature derivative;

the collision constraint is used to constrain the second obstacle from colliding with the ego vehicle and the obstacle in the first driving scenario; and

the travel specification constraint is used to constrain the behavior of the first obstacle to meet a predefined travel specification.

32. The scenario generation apparatus according to any one of claims 18 to 31, wherein the scenario data of the first driving scenario further comprises initial motion information of a fourth obstacle, and the fourth obstacle does not interact with the ego vehicle and the first obstacle; and

the processing unit is further configured to:

generate the target driving scenario based on the first motion information of the first obstacle, the second motion information of the second obstacle, and the initial motion information of the fourth obstacle.

33. A compute device, wherein the compute device comprises a memory and a processor, and the memory is configured to store program instructions; and

when the processor executes the program instructions in the memory, the compute device is enabled to perform the method according to any one of claims 1 to 17.

34. A computer-readable storage medium, wherein the computer-readable storage medium stores program instructions, and when the program instructions are executed by a processor, the method according to any one of claims 1 to 17 is implemented.

EP 4 787 304 A1

FIG. 1

FIG. 2

30

S301: Obtain scenario data of a first driving scenario

S302: Adjust initial motion information of a first obstacle, to generate first motion information of the first obstacle

S303: Obtain second motion information of a second obstacle based on initial motion information of the second obstacle and the first motion information of the first obstacle

S304: Generate a target driving scenario based on the first motion information of the first obstacle and the second motion information of the second obstacle

FIG. 3

FIG. 4

FIG. 5

FIG. 6A

FIG. 6B

FIG. 7A

FIG. 7B

Vehicle chasing phase

Speed adjustment phase

Cut-in phase

Social vehicle

Ego vehicle

Social vehicle

Chase distance

Social vehicle

Social vehicle

Ego vehicle

Chase distance

Overtake distance

Social vehicle

Social vehicle

Ego vehicle

Overtake distance

FIG. 8

EP 4 787 304 A1

**Strong-interaction obstacle**

**Initial movement trajectory**

**First movement trajectory**

FIG. 9

FIG. 10

First obstacle

Ego vehicle

FIG. 11A

First obstacle    Ego vehicle

FIG. 11B

FIG. 12

130

Scenario generation apparatus

1301

1302

Obtaining unit

Processing unit

FIG. 13

Processor 1402

Communication interface 1403

Bus 1404

Memory 1401

Compute device 140

FIG. 14

## INTERNATIONAL SEARCH REPORT

| | International application No. |
| --- | --- |
| | **PCT/CN2024/116579** |

**A. CLASSIFICATION OF SUBJECT MATTER**

G06T 7/20(2017.01)i

According to International Patent Classification (IPC) or to both national classification and IPC

**B. FIELDS SEARCHED**

Minimum documentation searched (classification system followed by classification symbols)

G06T

Documentation searched other than minimum documentation to the extent that such documents are included in the fields searched

Electronic data base consulted during the international search (name of data base and, where practicable, search terms used)

VEN, CNABS, CNTXT, WOTXT, USTXT, EPTXT, CNKI, IEEE: 场景, 驾驶, 自动驾驶, 避障, 障碍物, 第一, 第二, 交互, 调整, 运动信息, 轨迹, 代价, scene, driv+, autonomous driving, obstacle avoidance, obstacle, first, second, interact+, adjust+, motion information, trajectory, cost

**C. DOCUMENTS CONSIDERED TO BE RELEVANT**

| Category* | Citation of document, with indication, where appropriate, of the relevant passages | Relevant to claim No. |
| --- | --- | --- |
| X | CN 114692289 A (HUAWEI TECHNOLOGIES CO., LTD.) 01 July 2022 (2022-07-01) description, paragraphs 20-137 | 1-34 |
| A | CN 112965466 A (BEIJING BAIDU NETCOM SCIENCE AND TECHNOLOGY CO., LTD.) 15 June 2021 (2021-06-15) entire document | 1-34 |
| A | CN 112965476 A (XI'AN JIAOTONG UNIVERSITY) 15 June 2021 (2021-06-15) entire document | 1-34 |
| A | CN 115373392 A (HIGER BUS CO., LTD.) 22 November 2022 (2022-11-22) entire document | 1-34 |
| A | CN 115526069 A (GAC AION NEW ENERGY AUTOMOBILE CO., LTD.) 27 December 2022 (2022-12-27) entire document | 1-34 |

☐ Further documents are listed in the continuation of Box C. ☑ See patent family annex.

| | |
| --- | --- |
| \* Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| **29 October 2024** | **18 November 2024** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/116579**

| Patent document cited in search report | | | Publication date (day/month/year) | Patent family member(s) | | | Publication date (day/month/year) |
|---|---|---|---|---|---|---|---|
| CN | 114692289 | A | 01 July 2022 | WO | 2022143057 | A1 | 07 July 2022 |
| | | | | EP | 4261729 | A1 | 18 October 2023 |
| | | | | US | 2023339513 | A1 | 26 October 2023 |
| CN | 112965466 | A | 15 June 2021 | None | | | |
| CN | 112965476 | A | 15 June 2021 | None | | | |
| CN | 115373392 | A | 22 November 2022 | None | | | |
| CN | 115526069 | A | 27 December 2022 | None | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311251719